(19) Europäisches Patentamt
European Patent Office
Office européen des brevets

(11) **EP 1 121 686 B1**

(12) **EUROPEAN PATENT SPECIFICATION**

(45) Date of publication and mention
of the grant of the patent:
**02.01.2004 Bulletin 2004/01**

(51) Int Cl.⁷: **G10L 19/02**, G10L 19/14

(21) Application number: **99950739.5**

(86) International application number:
**PCT/EP1999/007801**

(22) Date of filing: **07.10.1999**

(87) International publication number:
**WO 2000/022610 (20.04.2000 Gazette 2000/16)**

(54) **SPEECH PARAMETER COMPRESSION**

SPRACHPARAMETER-KOMPRESSION

COMPRESSION DE PARAMETRES VOCAUX

(84) Designated Contracting States:
**DE FR GB NL**

(30) Priority: **13.10.1998 GB 9822344**

(43) Date of publication of application:
**08.08.2001 Bulletin 2001/32**

(73) Proprietor: **Nokia Corporation**
**02150 Espoo (FI)**

(72) Inventors:
• **HAAVISTO, Petri**
**FIN-33580 Tampere (FI)**
• **KISS, Imre**
**FIN-33720 Tampere (FI)**

(74) Representative: **Jones, Kendra Louise et al**
**Nokia IPR Department,**
**Nokia House,**
**Summit Avenue**
**Farnborough, Hampshire GU14 0NG (GB)**

(56) References cited:
• **KEIICHI TOKUDA ET AL: "SPEECH CODING BASED ON ADAPTIVE MEL-CEPSTRAL ANALYSIS AND ITS EVALUATION" ELECTRONICS & COMMUNICATIONS IN JAPAN, PART III - FUNDAMENTAL ELECTRONIC SCIENCE,US,SCRIPTA TECHNICA. NEW YORK, vol. 78, no. 6, June 1995 (1995-06), page 50-61 XP000551800 ISSN: 1042-0967**

• **FARVARDIN N ET AL: "EFFICIENT ENCODING OF SPEECH LSP PARAMETERS USING THE DISCRETE COSINE TRANSFORMATION" INTERNATIONAL CONFERENCE ON ACOUSTICS, SPEECH & SIGNAL PROCESSING. ICASSP,US,NEW YORK, IEEE, vol. CONF. 14, 23 - 26 May 1989, page 168-171 XP000089695**

• **BOJKOVIC Z S: "UPPER BOUND ON REDUNDANCY REDUCTION FOR REAL SPEECH D.P.C.M. SYSTEM" PROCEEDINGS OF THE EUROPEAN SIGNAL PROCESSING CONFERENCE (EUSIPCO),NL,AMSTERDAM, ELSEVIER, vol. CONF. 6, 24 August 1992 (1992-08-24), page 463-465 XP000348701 ISBN: 0-444-89587-6**

• **LOGAN J ET AL: "ADAPTIVE PITCH PERIOD DECIMATION AND ITS APPLICATION IN SPEECH COMPRESSION" PROCEEDINGS OF THE SOUTHEAST CONFERENCE (SOUTHEASTCON),US,NEW YORK, IEEE, 11 April 1996 (1996-04-11), page 220-222 XP000631720 ISBN: 0-7803-3089-7**

• **SABIN M J: "DPCM CODING OF SPECTRAL AMPLITUDES WITHOUT POSITIVE SLOPE OVERLOAD" IEEE TRANSACTIONS ON SIGNAL PROCESSING,US,IEEE, INC. NEW YORK, vol. 39, no. 3, March 1991 (1991-03), page 756-758 XP000224144 ISSN: 1053-587X**

• **VOLMARY C: "EFFECTIVE ENCODING OF SIDE INFORMATION PARAMETERS IN SPEECH CODING" PROCEEDINGS OF THE EUROPEAN SIGNAL PROCESSING CONFERENCE (EUSIPCO),NL,AMSTERDAM, NORTH HOLLAND, vol. CONF. 4, 5 September 1988 (1988-09-05) - 8 August 1988 (1988-08-08), page 1019-1022 XP000093924**

**Description**

The present invention relates to speech recognition, and more particularly to compression of feature extracted parameters of speech signals for radio transmission between a mobile station and a radio network.

The main objective of speech recognition is to provide quick and easy access to a wide variety of computer services and communication systems by using human speech. Speech recognition applications range from simple voice control using a limited number of basic command words, like "yes" or "no", or numbers from zero to nine, to much more flexible systems capable of turning spontaneous speech into written text, i.e. dictation systems. In dictation-like applications the vocabulary is typically very extensive, containing tens of thousands of words, and thus in such systems -which are known as Large Vocabulary Continuous Speech Recognition (LVCSR) systems-computational complexity and memory requirements are very high.

A general speech recognition system can roughly be divided into two parts. First the most important characteristics of the speech signal are captured in a pre-processing stage called feature extraction, and this part of the speech recognition system is called the front-end (FE). Feature extracted parameters, known as feature vectors, are then fed into the actual recogniser or back-end (BE), which performs recognition and outputs the result. The more complex the recognition task, the more important it is to have good quality feature vectors. Environmental noise and distortion are typical factors which deteriorate the quality of feature vectors, and in turn, influence the performance of the speech recognition system as a whole. Although the FE can provide some robustness against these factors, the quality of the speech fed to the FE is critical.

Speech recognition technology is growing in its application in mobile telecommunications. Cellular phones that are able to make a call by simply listening to the phone number or the name of the person the user wants to talk to are already available. However, more complex tasks, such as dictation, are still very difficult to implement in a mobile environment. Since it is crucial to provide good quality speech, it would seem appropriate to try to place the recogniser as close to the user as possible, i.e., directly in the telephone handset. However, the computational load and memory demands of LVCSR do not make this a viable approach. Another way is to place the recogniser in the cellular network where it is possible to take advantage of high performance computers which can be shared by many users at a time. Experiments have shown that when speech is compressed and then transmitted in a channel subject to transmission errors -such as those always present in a mobile environment- the quality of extracted features is not adequate for LVCSP.

To address these problem, it has been proposed to place the BE at a central place in the cellular network, whilst the FE part, which computationally has comparatively low demands, can be located in the telephone handset. This type of arrangement of the speech recognition system over the network is referred to as Distributed Speech Recognition (DSR). In DSR, it is proposed that the speech signal is transformed into feature vectors locally at the handset and these can be transmitted as digital data over the transmission channel relatively free of errors. When feature vectors are extracted at the handset, the BE can operate on the data stream, or sequence of feature vectors, representing high quality speech and therefore good recognition performance is achievable.

Nevertheless, a problem exists in that even though feature vectors give a much more compact representation of speech than the speech waveform itself, they are still not sufficiently compressed for efficient transmission over the data channel of most cellular networks. An approximate estimation of the necessary amount of compression of feature vectors is as follows. Commonly used features for speech recognition are the so-called mel-frequency cepstral coefficients or MFCCs. A typical speech recognition system uses twelve MFCC coefficients plus an additional energy measure, such as 0th cepstral coefficient ($c_0$) or logarithmic signal energy (logE). These are called static features. A typical feature vector contains these 13 static features and the first and second time-derivatives of each, resulting in a total size of 39. Since the time derivatives can be calculated from the static parameters they need not be transmitted. Assuming 4-byte floating point arithmetic and a feature vector in every 10ms, the bandwidth necessary for transmitting extracted features yields to be 13*4*8*100=41600 bps. A typical cellular network, such as GSM, has data channels of 9600 bps at full rate or 4800 bps at half rate. Thus, compression ratios of the order of 1:5 and 1:9 are necessary for full rate and half rate data channels, respectively. The compression should not cause any significant, or more preferably, any measurable loss in recognition performance.

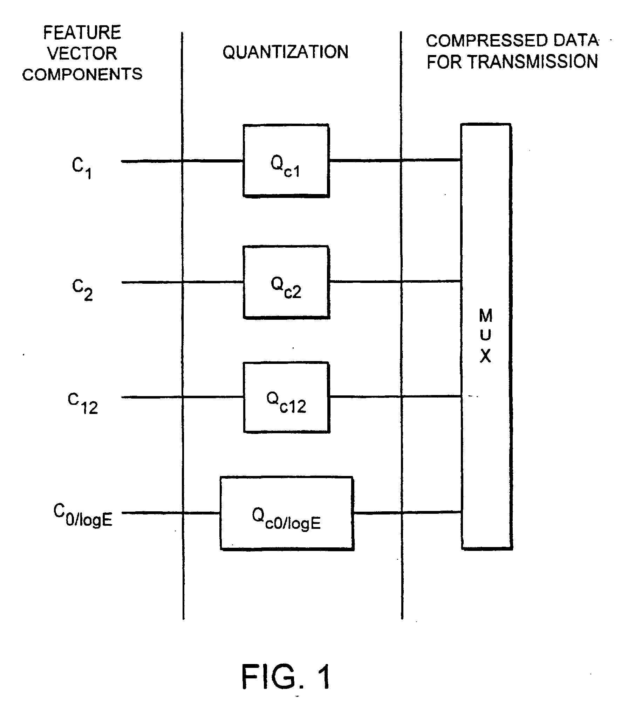

One prior art approach for compressing feature vectors is detailed in a paper by V. Digalakis, L. Neumeyer, and M. Perakakis, entitled "Quantization of Cepstral Parameters For Speech Recognition Over the World Wide Web", taken from Proceedings ICASSP'98, pp. 989-992, Seattle, WA, May, 1998 and depicted in Figure 1. The components of an input feature vector are scalar quantized independently of each other. For quantization uniform or non-uniform quantizers can be used. The outputs of the quantizers (quantizer table indices) represent the compressed information to be transmitted. This solution has two main drawbacks. Even if the FE algorithm is kept unchanged, feature vectors are affected by environmental variations, such as changes in acoustic environment, microphone type, signal-to-noise ratio, or even by the level of speech signal ($c_0$/logE component), quantizing them in the presented way makes the system vulnerable against any kind of change in these factors. Secondly, the method does not take into consideration the significant amount of correlation between feature vectors closely placed in time. If exploited, this property would considerably reduce the compressed bit-rate.

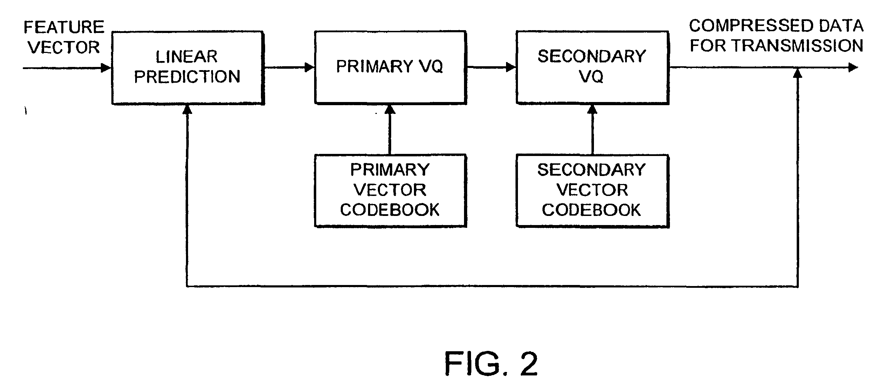

A more complex way of compression is presented in a paper by G. N. Ramaswamy, and P. S. Gopalakrishnan, entitled "Compression of Acoustic Features For Speech Recognition In Network Environments", Proceedings ICASSP'98, pp. 977-980, Seattle, WA, May, 1998, as shown in Figure 2. in this case simple techniques, such as linear prediction and multi-stage vector quantization are applied. First, the input feature vector is compared to an estimate predicted from the previous encoded vector. The prediction residual is then quantized using the primary VQ, which operates on the full-size residual vector. The residual of the primary VQ is further processed by the secondary VQ as follows. The residual vector is first decomposed into 3 sub-vectors of size 6, 6, and 1. That is, cepstral coefficients c1.. c6, c7..c12, and the energy measure $c_0$/logE are treated separately. The first two sub-vectors are then vector quantized using separate VQs, and the energy measure is scalar quantized. Indices from the primary VQ, from the secondary VQs and from the scalar quantizer represent the compressed information to be transmitted. The main difficulty with this second approach is that due to vector quantization of high dimensional vectors, the memory requirement is extensive. For achieving a bit-rate of 4.0 Kbps by compressing feature vectors of size 13, the required amount of memory is approximately 400Kbytes assuming 4-byte floating-point arithmetic. Even if in an actual implementation half of this memory can be saved by using 2-byte integer precision, the method would still be unfeasible for a mobile handset application.

Further prior art comprises:

D1: Tokuda et al.: "Speech Coding Based on Adaptive Mel-Cepstral Analysis and its Evaluation", Electronics in Japan, Part III: Fundamental Electronic Science, vol. 78 (1995), New York, P.50-60 discloses a method for speech coding, where mel-cepstral parameters are used in adaptive differential pulse code modulation.

D2: Bojkovic: "Upper Bound on Redundancy Reduction for Real Speech DPCM System", Proceedings of the European Signal Processing Conference, Amsterdam (1992), p. 463-465 discloses a method for optimizing DPCM for speech by using the statistical parameters of speech.

D3: WO 9517746 discloses a method wherein the coefficients of linear predictive coding (LPC) are transformed to line spectrum pairs (LSPs) that can be transmitted more robustly than the LPCs. For coding before transmission, D3 uses differential pulse code modulation. After transmission, i.e. at the back end, the LSPs are transformed back to LPCs, which are in turn used to obtain cepstral coefficients useful for voice recognition

The present invention aims to address the problems mentioned above, and accordingly, in one aspect, provides a method for compressing cepstral parameters of a speech waveform for transmission and/or storage comprising transform coding a first set of selected ones of said cepstral parameters to provide a plurality of transform coefficients and differential pulse code modulating at least one of said plurality of transform coefficients.

Advantageously, the method comprises pulse code modulating one or more of the remainder of said plurality of transform coefficients.

In a preferred embodiment, the method comprises differential pulse code modulating a second set of selected ones of said feature extracted parameters.

By using transform coding, the time-domain correlations of feature extracted parameters are exploited very efficiently. This results in a significant decrease in coding bit-rate although there will be experienced a slight delay due to the coding process, which can be neglected in most practical applications. Further, by using differential pulse code modulation coding of some of the transformed coefficients, the method is desensitised to environmental variations. This environmental robustness means that the coding performance is unaffected by environmental factors. The final back end performance, however, may decrease in adverse conditions, but the compression algorithm makes no contribution to this. It should be noted that the data which is differential pulse code modulated can be the transform coefficients or derivatives thereof, in other words signals derived from the transform coefficients can be provided for differential pulse code modulation. Further, the first set of selected ones of said feature extracted parameters could conceivably include all feature extracted parameters.

In a preferred embodiment, the method comprises providing periodic pulse code modulation updates for the differential pulse code modulation coding.

Advantageously, the method comprises scalar quantizing the transform coefficients.

By using scalar quantization of the final parameters, a significant amount of memory can be saved resulting in a memory requirement of about 5-6Kbytes. The final parameters are made to be well suited for scalar quantization. Further, by using periodic PCM updates for the DPCM coding, the algorithm is able to resynchronise even if some part of the compressed data is lost. This can happen in a mobile environment if serious error occurs in the transmission channel.

Preferably, said differential pulse code modulating employs scalar and/or vector quantization.

Advantageously the method comprises buffering said feature extracted parameters in a pre-processing step.

Conveniently, the transform coding comprises discrete cosine transform coding.

In a preferred embodiment the differential pulse code modulating includes probability density function (pdf) optimised quantizers and linear or non-linear predictors. Optionally, the quantizers and predictors are optimised separately or jointly.

In a second aspect, the invention resides in apparatus for compressing cepstral parameters of a speech waveform for transmission and/or storage comprising a transform coder for transform coding a first set of selected ones of said cepstral parameters to provide a plurality of transform coefficients and a differential pulse code modulator for differential pulse code modulating at least one of said plurality of transform coefficients.

Advantageously, the apparatus comprises a pulse code modulator for pulse code modulating one or more of the remainder of said plurality of transform coefficients.

In a preferred embodiment, the apparatus comprises a differential pulse code modulator for differential pulse code modulating a second set of selected ones of said feature extracted parameters.

In a third aspect, the invention provides a portable radio communication device comprising apparatus for compressing cepstral parameters of a speech waveform for transmission and/or storage comprising a transform coder for transform coding a first set of selected ones of said cepstral parameters to provide a plurality of transform coefficients and a differential pulse code modulator for differential pulse code modulating at least one of said plurality of transform coefficients.

In a fourth aspect, the invention provides a speech recognition system for a radio communication system comprising a mobile station operating in a radio network, the system comprising a front-end feature extraction means disposed in said mobile station and a back-end recognition means associated with the network and compression means for encoding cepstral parameters of a speech waveform, said compression means comprising a transform coder for transform coding a first set of selected ones of said cepstral parameters to provide a plurality of transform coefficients and a differential pulse code modulator for differential pulse code modulating at least one of said plurality of transform coefficients.

In a fifth aspect, the invention extends to a method for decompressing compressed cepstral parameters of a speech waveform comprising inverse differential pulse code modulating of at least one of a plurality of differential pulse code modulated transform coefficients to provide transform coefficients and inverse transform coding of said transform coefficients

Advantageously, the decoding method comprises inverse pulse code modulating of one or more of the plurality of pulse code modulated transform coefficients to provide the remainder of the transform coefficients.

In a preferred embodiment, the decoding method comprises inverse differential pulse code modulating of at least one of a plurality of differential pulse code modulated signals to provide a second set of decoded feature extracted parameters.

In a broad expression of the invention, there is provided a method and apparatus for encoding data for transmission and/or storage comprising transform coding said data and differential pulse code modulating said transform coded data.

The present invention will now be described by way of example with reference to the followings drawings in which:

Figures 1 and 2 show prior art arrangements;

Figure 3 is a block diagram of a front-end algorithm;

Figure 4 is a block diagram illustrating a preferred embodiment of one aspect of the present invention;

Figures 5a and 5b illustrate in greater detail elements of the preferred embodiment of Figure 4;

Figure 6 is a block diagram illustrating a preferred embodiment of a further aspect of the present invention; and

Figures 7a and 7b illustrate in greater detail elements of the preferred embodiment of Figure 6.

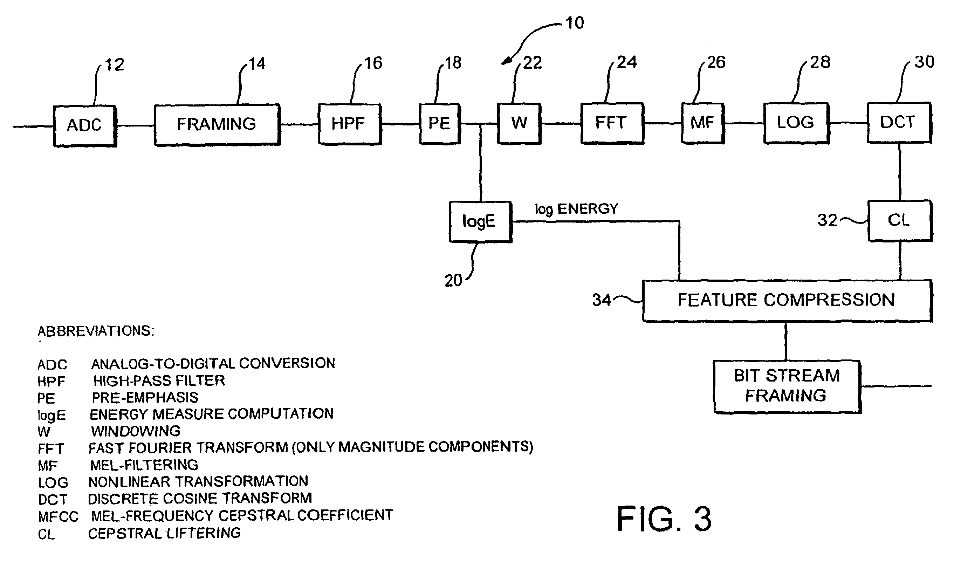

Figures 1 and 2 have been described in relation to prior art. Turning then to Figure 3, there is shown the functional blocks of a front-end algorithm 10 whose function, as has already been mentioned, is to capture the salient characteristics from an input speech waveform and output feature extracted parameters called feature vectors which are thus representative of the speech waveform.

**Front-end algorithm**

The abbreviations together with reference numerals used in Figure 3 are as follows:

*ADC*  analogue-to-digital converter 12
*HPF*  high-pass filter 16
*PE*  pre-emphasis 18
*logE*  energy measure computation 20
*W*  windowing 22
*FFT*  fast Fourier transform (only magnitude components) 24
*MF*  mel-filtering 26
*LOG*  non-linear transformation 28
*DCT*  discrete cosine transform 30
*MFCC*  mel-frequency cepstral coefficient
*CL*  cepstral liftering 32

The speech signal to be encoded is initially digitised by an analogue-to-digital converter (*ADC*) 12. Different word-lengths are used depending on the application. Preferred sampling rates of the *ADC* block are $f_{s1}$=8 kHz, $f_{s2}$=11 kHz, and $f_{s3}$=16 kHz. The digital speech signal is then subject to framing 14 in which the signal is divided into overlapping frames of $N$ samples. The frame shift interval (difference between the starting points of consecutive frames) is $M$ samples, where the parameter $M$ defines the number of frames per unit time. The specific values of $N$ and $M$ depend on the sampling rate according to the following table.
The frame length is 25 ms for 8 and 16kHz sampling, and 23.27 ms for 11 kHz.

| Sampling rate (kHz) | $f_{s3}$=16 | $f_{s2}$=11 | $f_{s1}$=8 |
|---|---|---|---|
| Frame length $N$ (samples) | 400 | 256 | 200 |
| Shift interval $M$ (samples) | 160 | 110 | 80 |

The signal is then passed through a high-pass filter (*HPF*) 16 which serves to remove the DC component from the input signal. Mean subtraction is applied for each frame independently.

$$s_{out}(n) = s_{in}(n) - \frac{1}{N}\sum_{i=1}^{N} s_{in}(i), \qquad 1 \le n \le N .$$

Here $N$ is the frame length and $s_{in}$ and $s_{out}$ are the input and output of the *HPF* block, respectively.
Next, a pre-emphasis filter (PE) 18 is applied to the output of the *HPF* block.

$$s_{out}(n) = s_{in}(n) - 0.97 \cdot s_{in}(n-1).$$

Here $s_{in}$ and $s_{out}$ are the input and output of the pre-emphasis block, respectively.
The logarithmic frame energy (*logE*) 20 is computed after the high-pass filter (*HPF*) 16 and pre-emphasis (*PE*) 18

$$\text{logE} = \ln\left(\sum_{i=1}^{N} s_i^2\right) .$$

Here $N$ is the frame length and $s$ is the output of the *PE* block 18.
A floor is used in the energy calculation. The floor value (lower limit for the argument of ln) is 54.6.
At block 22 a Hamming window (*W*) of length $N$ is applied to the output of the pre-emphasis block:

$$s_{out}(n) = \left\{ 0.54 - 0.46 \cdot \cos\left(\frac{2\pi(n-1)}{N-1}\right) \right\} \cdot s_{in}(n), \quad 1 \le n \le N$$

Here $N$ is the frame length and $s_{in}$ and $s_{out}$ are the input and output of the windowing block, respectively.

In the FFT block (*FFT*) 24 each frame of $N$ samples is zero padded to form an extended frame of 256 samples for 8 and 11 kHz sampling and 512 samples for 16 kHz. An FFT of length 256 or 512 respectively, is applied to compute the magnitude spectrum resulting in FFT bins calculated as follows,

$$bin_k = \left| \sum_{n=0}^{FFTL-1} s(n)e^{-jnk\frac{2\pi}{FFTL}} \right|, \quad k = 0,\ldots,FFTL-1.$$

Here $s(n)$ is the input to the FFT block, *FFTL* is the block length (256 or 512 samples), and $bin_k$ is the absolute value of the resulting complex vector.

Next is a process called mel filtering at 26. For further processing, the low frequency components of the magnitude spectrum are ignored. The useful frequency band lies between 64 Hz and half of the actual sampling frequency. This band is divided into 23 channels equidistant in the mel frequency domain. Each channel has a triangular-shaped frequency window. Consecutive channels overlap by 50%. (The choice of the starting frequency of the filter bank, $f_{start}$=64Hz, roughly corresponds to the case where the full frequency band is divided into 24 channels and the first channel is discarded using any of the three possible sampling frequencies.)

The centre frequencies of the channels ($f_{c_i}$) in terms of FFT bin indices ($cbin_i$ for the $i$th channel) are calculated as follows,

$$Mel\{x\} = 2595 \cdot \log_{10}\left(1 + \frac{x}{700}\right),$$

$$f_{c_i} = Mel^{-1}\left\{ Mel\{f_{start}\} + \frac{Mel\{f_s/2\} - Mel\{f_{start}\}}{23+1}i \right\}, \quad i = 1,\ldots,23,$$

$$cbin_i = round\left\{ \frac{2f_{c_i}}{f_s}\left(\frac{FFTL}{2}+1\right) \right\}.$$

Where *round(.)* stands for rounding towards the nearest integer.

The output of the mel filter 26, denoted as $fbank_k$, is the weighted sum of the FFT magnitude spectrum values ($bin_i$) in each band. Triangular, half-overlapped windowing is used as follows,

$$fbank_k = \sum_{i=cbin_{k-1}}^{cbin_k} \frac{i - cbin_{k-1}}{cbin_k - cbin_{k-1}}bin_i + \sum_{i=cbin_k+1}^{cbin_{k+1}} \left(1 - \frac{i - cbin_k}{cbin_{k+1} - cbin_k}\right)bin_i,$$

where k=1,...,23, $cbin_0$ denotes the FFT bin index corresponding to the starting frequency, that is

$$cbin_0 = round\left\{\frac{2f_{start}}{f_s}\left(\frac{FFTL}{2}+1\right)\right\},$$

and $cbin_{24}$ is given by $FFTL/2+1$, i.e., the FFT bin index corresponding to half of the sampling frequency.

The natural logarithm of the output of mel filtering is calculated in the non-linear transformation block (LOG) 28.

$$f_i = \ln(fbank_i),\ i = 1,...,23.$$

Flooring is applied as in the case of energy calculation. The floor value here is 1.0.

Thirteen cepstral coefficients are calculated from the output of the non-linear transformation block (*LOG*) 28.

$$c_i = \sum_{j=1}^{23} f_j \cdot \cos\left(\frac{\pi \cdot i}{23}(j-0.5)\right), \qquad 0 \le i \le 12.$$

It should be noted that the $c_0$ coefficient is often redundant when the energy coefficient (*logE*) is used. It is expected that the bit stream format will be structured with several optional transmission modes so that only one of these two coefficients or both of them are transmitted depending on the available bandwidth. However, here the FE computation algorithm is defined for both energy and $c_0$.

Cepstral liftering is applied to the 13 cepstral coefficients at block 32 in accordance with the following equation.

$$c_{n_{out}} = \left(1+\frac{P}{2}\cdot\sin\left(\frac{\pi\cdot n}{P}\right)\right)\cdot c_{n_{in}}, \qquad 0 \le n \le 12,\ \ P = 22.$$

Here $c_{n_{in}}$ and $c_{n_{out}}$ are the input and output of the cepstral liftering block, respectively. Hereafter, subindex "*out*" will be omitted.

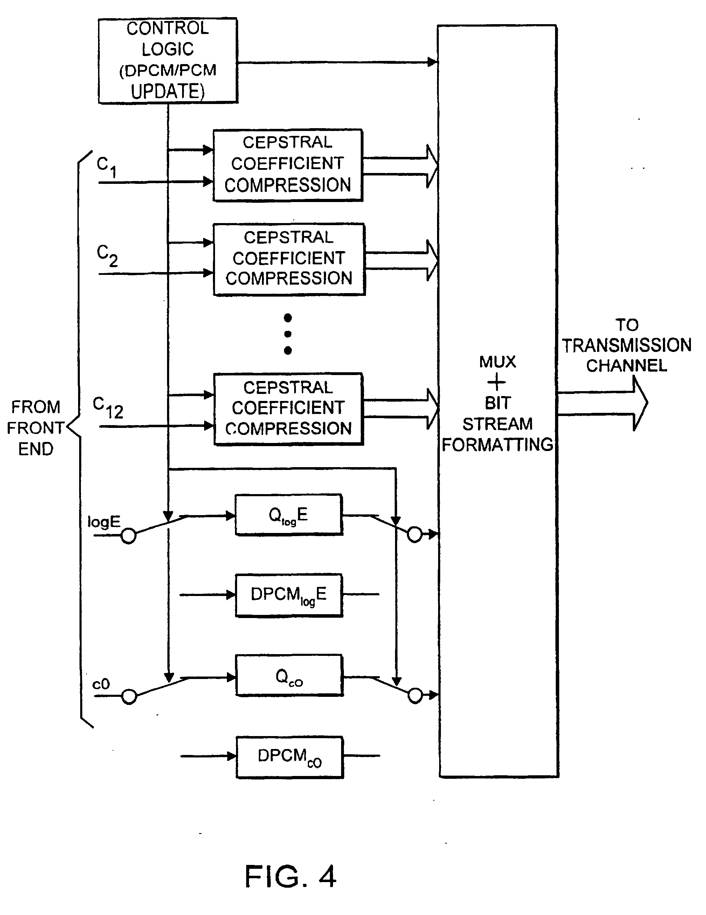

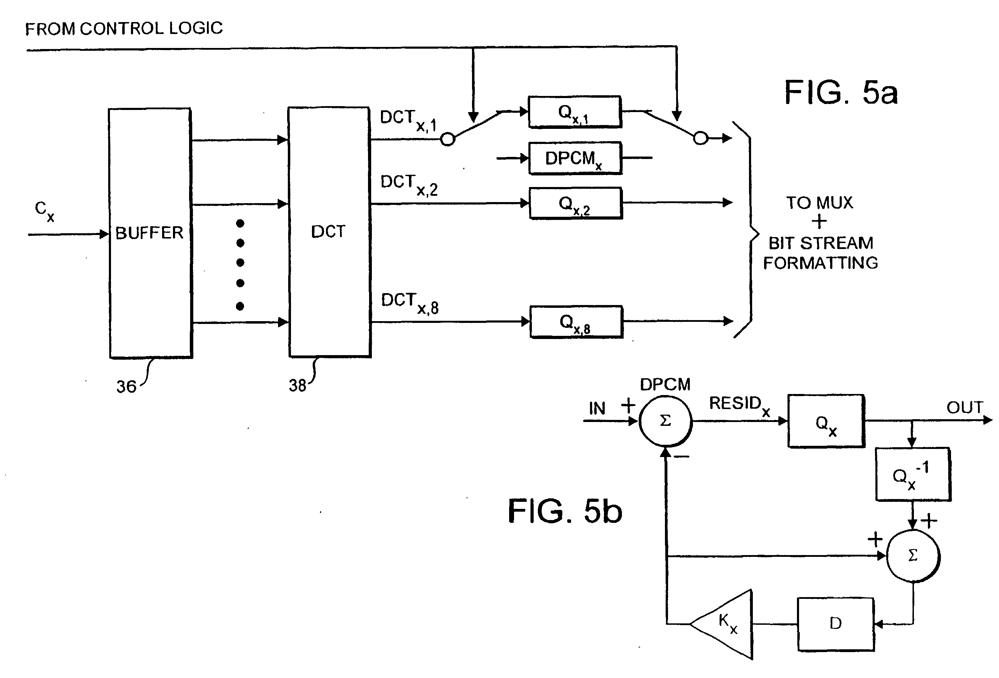

The front-end output comprises a final feature vector consisting of 14 components: the log-energy component (*logE*) and the 13 static cepstral components ($c_1...c_{12}$, $c_0$). The feature vector is then subject to compression in block 34. Each feature vector component is coded individually. Details of the compression scheme will now be described with reference to Figures 4, 5a and 5b.

**Feature vector compression**

As is apparent from Figure 4, feature vector components are processed separately and different methods are used for encoding MFCC coefficients $c_1...c_{12}$ and energy measures $c_0$ and *logE*. It should be noted that a given BE most probably uses either the $c_0$ or *logE* measure but not both. The compression algorithm should, however, support both kind of BEs, therefore both $c_0$ and *logE* have to be encoded. It is left for the application to determine whether both energy measures are transmitted or a selection mechanism is used to choose one of them.

Cepstral coefficients $c_1...c_{12}$ are compressed in a very similar manner, though independently of each other. Hereafter, *x* stands for the coefficient number (*x=1...12*). Figure 5a shows a detailed diagram of the cepstral coefficient compression. First, a block of eight consecutive values are taken from cepstral coefficient $c_x$ and stored in a buffer 36. The arrangement is such that frames do not overlap and one frame is stored in the buffer at a time.

The content of the buffer 36 is then transformed using a discrete cosine transform (*DCT*) at 38, resulting in eight DCT coefficients $DCT_{x,1...8}$. For the frame between time instants $t_i$ and $t_{i+7}$,

$$\begin{bmatrix} (DCT_{x,1})_i \\ (DCT_{x,2})_i \\ \dots \\ (DCT_{x,8})_i \end{bmatrix} = T \cdot \begin{bmatrix} c_{x,i} \\ c_{x,i+1} \\ \dots \\ c_{x,i+7} \end{bmatrix}, \quad x = 1\dots12,$$

where, $c_{x,i}$ stands for cepstral coefficient $c_x$, at time instant $t_i$ and $(DCT_{x,y})_i$ denotes the $y$th DCT coefficient of cepstral coefficient $c_x$, at time instant $t_i$.

The elements of the DCT transformation matrix $T$ are calculated as follows,

$$T_{k,n} = 2 \cdot \cos\left[\left(n + \frac{1}{2}\right)\frac{k\pi}{8}\right],$$

where $k$ denotes the row number and n the column number, $k,n = 0,\dots,7$.

**Encoding $DCT_{x,1}$**

The first DCT coefficients ($DCT_{x,1}$) are DPCM encoded ($DPCM_x$) with periodic PCM updates ($Q_{x,1}$) to ensure synchronisation between the transmitter and the receiver The DPCM/PCM switch is controlled by separate logic (*Control Logic, DPCM/PCM Update*).

A detailed diagram of DPCM encoding is depicted in Figure 5b. The design parameters for the DPCM coding are the predictor used, and the quantizer for the residual signal. Here, first order linear prediction ($k_x$) and a 6-bit pdf-optimised residual quantization ($Q_x$) are used. The prediction is based on the previous encoded vector. Predictor coefficients ($k_x$) are tabulated in Appendix (table *DCT_PRED*).

The encoding part of quantization ($Q_x$) maps incoming floating-point samples to binary codewords as follows,

$$Qin_i \in Cell_k, \text{ if } Qin_i \geq Lbound_k, \ k = 0\dots K - 1,$$

$$\text{and } Qin_i < Ubound_k,$$

$$Ubound_k = Lbound_{k+1} = \frac{Centr_k + Centr_{k+1}}{2},$$

$$Lbound_0 = -\infty,$$

$$UBound_{K-1} = \infty,$$

$$Cod_i = dec2bin\{k\},$$

where $Qin_i$ and $Cod_i$ denote the input and the output of the encoder respectively, at time instant $t_i$. $Cell_k$ is the $k$th cell of the quantizer with upper and lower boundaries $Ubound_k$ and $Lbound_k$. The lower bound of the zeroth cell is assumed to be minus infinity and the upper bound of the last cell plus infinity. $Centr_k$ stands for the centroid of the $k$th cell. Cell index $k$ forms the outgoing codeword after decimal-to-binary conversion. Each codeword has the same length, $L=\log_2 K$, i.e., no source coding is applied.

For DPCM residual quantization $K=64$. Quantizer cell centroids can be found in Appendix (tables *DCT_x_1_DPCM, x=1..12*).

For PCM updates ($Q_{x,1}$) uniform quantizers are employed with bit-resolution $B=12$ bits per sample. Encoding part of uniform quantization consists of shifting, scaling, rounding and decimal-to-binary conversion as follows,

$$Cod_i = dec2bin\left\{floor\left\{\frac{(Qin_i - Min)\cdot 2^B}{Max - Min}\right\}\right\},$$

$$if \quad arg\{dec2bin(.)\} > 2^B - 1, \quad Cod_i = dec2bin\{2^B - 1\},$$

$$else\ if \quad arg\{dec2bin(.)\} < 0, \quad\quad Cod_i = dec2bin\{0\},$$

where *floor(.)* stands for rounding to the nearest integer towards minus infinity. The corresponding *Min* and *Max* values (dynamic ranges) for quantizers $Q_{x,1}$ can be found in Appendix (tables *DCT_MIN* and *DCT_MAX,* respectively).

PCM updates are transmitted instead of a DPCM residual in every 6th frame (in every 480ms) controlled by the *Control Logic*.

### Encoding $DCT_{x,2...8}$

DCT coefficients $DCT_{x,2...8}$ are quantized using pdf-optimised quantizers ($Q_{x,2...8}$) similarly to $Q_{x,1}$. Detailed bit allocations are given below in Table 1. Note that the total number of bits is always equal to 18 for x=1,...,12 (x is the cepstral coefficient index), but the bit allocation is slightly different for $c_1$ than for $c_2..c_{12}$. Quantiser centroid values can be found in the Appendix (tables *DCT_x_y_PCM, x=1..12, y=2..8*).

Table 1

| Bit allocation for quantizers $Q_{.1...12,2...8}$ | | | | | | | |
|---|---|---|---|---|---|---|---|
| $Q_{x,y}$ | Y=2 | 3 | 4 | 5 | 6 | 7 | 8 |
| x=1 | 5 | 3 | 3 | 2 | 2 | 2 | 1 |
| 2 | 4 | 3 | 3 | 2 | 2 | 2 | 2 |
| 3 | 4 | 3 | 3 | 2 | 2 | 2 | 2 |
| 4 | 4 | 3 | 3 | 2 | 2 | 2 | 2 |
| 5 | 4 | 3 | 3 | 2 | 2 | 2 | 2 |
| 6 | 4 | 3 | 3 | 2 | 2 | 2 | 2 |
| 7 | 4 | 3 | 3 | 2 | 2 | 2 | 2 |
| 8 | 4 | 3 | 3 | 2 | 2 | 2 | 2 |
| 9 | 4 | 3 | 3 | 2 | 2 | 2 | 2 |
| 10 | 4 | 3 | 3 | 2 | 2 | 2 | 2 |
| 11 | 4 | 3 | 3 | 2 | 2 | 2 | 2 |
| 12 | 4 | 3 | 3 | 2 | 2 | 2 | 2 |

### Encoding $c_0$ and logE

Turning to the compression of energy measures, as it can be seen by comparing Figures 4 and 5a, the logarithmic energy (*logE*) and the zeroth cepstral ($c_0$) components are DPCM coded with periodic PCM updates similarly to the DCT coefficients $DCT_{x,1}$. The PCM updates are controlled by the *Control Logic*. It has to be noted that PCM updates for *logE* and $c_0$ components occur together with those for $DCT_{x,1}$, after every 48th sample (480 ms).

The DPCM encoding scheme presented in Figure 5b is used for the energy measures as well, using different predictor coefficients and quantizer parameters. The pdf-optimized DPCM residual quantizers ($DPCM_{logE}$ and $DPCM_{c0}$) have 3-bit resolution. For PCM updates, uniform quantizers ($Q_{logE}$ and $Q_{c0}$) with 12-bit resolution are used.

Predictor coefficients and quantiser centroids for $DPCM_{logE}$ and $DPCM_{c0}$ can be found in the Appendix (variables *CO_PRED* and *LOG_E_PRED* contain the predictor coefficients, and tables *CO_DPCM* and *LOG_E_DPCM* contain the quantiser centroids).

Minimum and maximum values (dynamic ranges) for quantizers $Q_{logE}$ and $Q_{c0}$ are tabulated in the Appendix (*C0_MIN* and *C0_MAX* for $c_0$, and *LOG_E_MIN* and *LOG_E_MAX* for *logE*).

**Bit stream formatting**

Next the preferred bit stream formatting will be described. The compressed bit stream consists of units of 80 ms each containing the data for 8 mel-cepstral vectors. Hereafter, this unit is referred to as a frame. Two types of frames can be defined. A PCM frame means a frame containing PCM updates for the first DCT coefficients and for the energy measures. The term DPCM frame stands for a frame where DPCM encoding is applied for these parameters. Since the bit stream formatting involves adding overhead to the bit stream it is advantageous to combine several frames into one multiframe. A multiframe consists of one PCM frame and five DPCM frames (spanning 480 ms of speech). However, the last transmitted multiframe may consist of 1...6 such units, spanning 80...480 ms of speech. A multiframe represents the basic unit for synchronisation while a frame is the basic unit for encoding and decoding.

**Format conventions**

The numbering, field mapping and bit transmission conventions used in this specification are defined in the following. Here, field refers to different parts of a multiframe, such as synchronisation flag, multiframe header, information field (data from PCM and/or DPCM frames), and cyclic redundancy code (CRC).

**Numbering convention**

The basic numbering convention is illustrated in Table 2. The bits in each field are grouped into octets. The bits of an octet are shown horizontally and are numbered from 1 to 8. Multiple octets are shown vertically and are numbered from 1 to n.

Table 2 Numbering convention

**Order of bit transmission**

The octets are transmitted in ascending numerical order; inside an octet, bit 1 is the first bit to be transmitted

**Field mapping convention**

When a field is contained within a single octet, the lowest-numbered bit of the field represents the lowest-order value (or the least significant bit).
When a field spans more than one octet, the highest-numbered bit of the first octet represents the highest-order value, and the lowest-numbered bit of the last octet represents the lowest-order value.
An exception to the preceding field-mapping convention is the cyclic redundancy code (CRC) field. In this case, the lowest-numbered bit of the octet is the highest-order term of the polynomial representing the CRC field.

**Framing**

All multiframes are delimited using pseudo-noise (PN) flags.

**Flags**

All multiframes, with the exception of the last transmitted multiframe, are preceded and followed by a 32 bit synchronisation flag consisting of the following unique bit pattern:

Table 4 32 bit synchronisation flag.

| Bit: | 8 | 7 | 6 | 5 | 4 | 3 | 2 | 1 | Octet |
|------|---|---|---|---|---|---|---|---|-------|
| | 1 | 0 | 0 | 1 | 1 | 0 | 0 | 0 | 1 |
| | 1 | 1 | 0 | 0 | 1 | 1 | 1 | 0 | 2 |
| | 1 | 0 | 0 | 0 | 1 | 0 | 1 | 0 | 3 |
| | 0 | 0 | 0 | 1 | 0 | 1 | 1 | 1 | 4 |

The flag preceding a multiframe is defined as the opening flag. The flag following a multiframe is defined as the closing flag. The closing flag of one multiframe may also serve as the opening flag of the next multiframe. However, all receivers employing this approach should accommodate receipt of more than one consecutive flag, as the flag may be transmitted repetitively from the transmitter to the receiver.

The last transmitted multiframe is followed by an inverse 32 bit flag, in which all of the bits of the 32 bit synchronisation flag are inverted. All receivers employing this approach should accommodate the receipt of the inverse flag at the end of any multiframe. The inverse flag marks the end of the feature transmission.

**Flag detection**

The detection of the start of a multiframe (or the end of the transmission) may be done by correlation of the incoming bit stream with the synchronisation flag (or with the inverse flag). The output of the correlator may be compared with a correlation threshold (CT). Whenever the output is equal or greater than the threshold, the receiver should decide that a flag has been detected.

**Multiframe Format**

All multiframes conform to the format shown in Table 5.

Table 5 Multiframe Format.

| Bit: | 8 | 7 | 6 | 5 | 4 | 3 | 2 | 1 | Octet: |
|------|---|---|---|---|---|---|---|---|--------|
| Header (2+n octets, n=0,1,2,...) | | | | | | | | | 1..2+n |
| Information field (45..264 octets) | | | | | | | | | . |
| CRC Field (1 octet) | | | | | | | | | . |

**Header**

The format of the header conforms to the format shown in Table 6.

Table 6 Format of the multiframe header field.

Bit:   8      7      6      5      4      3      2      1         Octet

:

| MULTIFRAME COUNTER | | | | | | | | 1 |
|---|---|---|---|---|---|---|---|---|
| C0 | LOG | SRATE | | MODE | | | EIF | 2 |
| EI | | | | | | | EIF | 3 |
| | | | | | | | | . |
| | | | | | | | | . |
| EI | | | | | | | EIF (=0) | 2+n |

C0: $c_0$ flag

LOGE: logE flag

SRATE: Sampling rate field

MODE: Mode field

EIF: Extra information flag

EI: Extra information field (n=0,1,2,...)

**Multiframe counter**

The 8-bit multiframe counter gives each multiframe a modulo-256 index. The counter value for the first multiframe is "1 ". The multiframe counter is incremented by one after the transmission of each multiframe.

**$c_0$ flag (C0)**

The 1-bit C0 flag specifies whether or not the multiframe contains the $c_0$ parameter bits. If the bit is set to value "1 ", the multiframe contains the $c_0$ parameter bits, and if the bit is set to value "0", the $c_0$ bits are not included.

**logE flag (LOGE)**

The 1-bit LOGE flag defines whether or not the multiframe contains the logE parameter bits. If the bit is set to value "1", the multiframe contains the logE parameter bits, and if the bit is set to value "0", the logE bits are not included.

**Sampling rate (SRATE) field**

The 2-bit SRATE field defines the sampling rate associated with the feature parameter bits. The bit combinations are allocated to the available sampling rates as shown in Table 7.

Table 7

| Format of the sampling rate field. | | |
|---|---|---|
| Sampling rate | SRATE field | |
| | Bit number | |
| | 6 | 5 |
| 8 kHz | 0 | 0 |
| 11 kHz | 0 | 1 |
| 16 kHz | 1 | 0 |
| Reserved for future use | 1 | 1 |

**Mode (MODE) field**

The 3-bit MODE field indicates the mode of the feature parameter stream. The default mode is "all zeros". Other modes are reserved for future use.

**Extra information flag (EIF)**

The 1-bit EIF flag enables the addition of extra information (EI) to the header field in a backwards compatible manner. If the flag is set to "1", the following 7 bits include EI for the multiframe. The 7 bits are followed by a new EIF with the same interpretation. If EIF is set to "0" (the default value), the multiframe contains no extra information. A conforming decoder will accept an unlimited amount of EI. However, the decoder is allowed to ignore the EI.

**Information field**

The information field contains the actual feature parameter bits. It is divided into 1...6 frames, each containing feature parameters from 80 ms of input speech. Normally the information field consists of 6 frames. However, the information field of the last transmitted multiframe may consist of 1...6 frames. The format of the field conforms to the format shown in Table 8.

Table 8

| Format of the Data field. | | | |
|---|---|---|---|
| Frame Number | Length (number of bits) | | |
| | C0="0" and LOGE="0" | C0="1" and LOGE="0" or C0="0" and LOGE="1" | C0="1" and LOGE="1" |
| 1 | 360 | 393 | 426 |
| 2 | 288 | 312 | 336 |
| 3 | 288 | 312 | 336 |
| 4 | 288 | 312 | 336 |
| 5 | 288 | 312 | 336 |
| 6 | 288 | 312 | 336 |
| Zero pad bits | 0 | 7 | 6 |

The lengths of the fields (bits of the frames) inside the information field depend on the values of the C0 and LOGE flags. The fields are transmitted in ascending numerical order. The data field is padded with a number of zero bits to provide octet alignment to the multiframe. Table 8 shows how the number of zero pad bits depends on the C0 and LOGE flags. In the case of a multiframe shorter than 6 frames, the number of zero pad bits is the same as for the multiframe with 6 frames.

The boundaries between the fields (Frames 1-6) of the information field are not aligned at octet boundaries. Therefore, the lengths of the fields are specified as number of bits, rather than octets. However, the complete information field is octet aligned. The contents of the frames are detailed in Tables 9 and 10.

Table 9

| Parameter assignment to Frame 1. | | | |
|---|---|---|---|
| Parameter | Number of bits | Additional information | Field index |
| $DCT_{1.1}$ - $DCT_{12.1}$ (PCM quantized) | 12 * 12 | | 1 |
| $c_0$ (PCM quantized) | 12 | 1) | 2 |
| logE (PCM quantized) | 12 | 2) | 3 |
| $DCT_{1.2}$ - $DCT_{12.2}$ | 5 + 11 * 4 | 3) | 4 |
| $c_0$ (DPCM quantized) | 3 | 1) | 5 |
| LogE (DPCM quantized) | 3 | 2) | 6 |
| $DCT_{1.3}$ - $DCT_{12.3}$ | 12 * 3 | 3) | 7 |
| $c_0$ (DPCM quantized) | 3 | 1) | 8 |
| LogE (DPCM quantized) | 3 | 2) | 9 |
| $DCT_{1.4}$ - $DCT_{12.4}$ | 12 * 3 | 3) | 10 |
| $c_0$ (DPCM quantized) | 3 | 1) | 11 |
| LogE (DPCM quantized) | 3 | 2) | 12 |
| $DCT_{1.5}$ - $DCT_{12.5}$ | 12 * 2 | 3) | 13 |
| $c_0$ (DPCM quantized) | 3 | 1) | 14 |
| logE (DPCM quantized) | 3 | 2) | 15 |
| $DCT_{1.6}$ - $DCT_{12.6}$ | 12 * 2 | 3) | 16 |
| $c_0$ (DPCM quantized) | 3 | 1) | 17 |
| logE (DPCM quantized) | 3 | 2) | 18 |
| $DCT_{1.7}$ - $DCT_{12.7}$ | 12 * 2 | 3) | 19 |
| $c_0$ (DPCM quantized) | 3 | 1) | 20 |
| LogE (DPCM quantized) | 3 | 2) | 21 |
| $DCT_{1.8}$ - $DCT_{12.8}$ | 1 + 11 * 2 | 3) | 22 |
| $c_0$ (DPCM quantized) | 3 | 1) | 23 |
| logE (DPCM quantized) | 3 | 2) | 24 |
| 1) This field is optional. It is included when the $c_0$ flag has the value "1 ".<br>2) This field is optional. It is included when the logE flag has the value "1 ".<br>3) The detailed bit allocation is found in Table 2. | | | |

The fields within Table 9 are transmitted in ascending order according to the field index; inside a field, the parameters are transmitted in ascending order according to their subindices. Inside a parameter, the least significant bit is the first to be transmitted.

**Format of Frames 2-6**

Table 10

| Parameter assignment to Frames 2-6. | | | |
|---|---|---|---|
| Parameter | Number of bits | Additional information | Field index |
| $DCT_{1.1}$ - $DCT_{12.1}$ (DPCM quantized) | 12*6 | | 1 |
| $c_0$ (DPCM quantized) | 3 | 1) | 2 |
| logE (DPCM quantized) | 3 | 2) | 3 |
| $DCT_{1.2}$ - $DCT_{12.2}$ | 5 + 11 * 4 | 3) | 4 |
| $c_0$ (DPCM quantized) | 3 | 1) | 5 |
| logE (DPCM quantized) | 3 | 2) | 6 |
| $DCT_{1.3}$ - $DCT_{12.3}$ | 12 * 3 | 3) | 7 |
| $c_0$ (DPCM quantized) | 3 | 1) | 8 |
| logE (DPCM quantized) | 3 | 2) | 9 |
| $DCT_{1.4}$ - $DCT_{12.4}$ | 12 * 3 | 3) | 10 |
| $c_0$ (DPCM quantized) | 3 | 1) | 11 |
| logE (DPCM quantized) | 3 | 2) | 12 |
| $DCT_{1.5}$ - $DCT_{12.5}$ | 12 * 2 | 3) | 13 |
| $c_0$ (DPCM quantized) | 3 | 1) | 14 |
| logE (DPCM quantized) | 3 | 2) | 15 |
| $DCT_{1.6}$ - $DCT_{12.6}$ | 12 * 2 | 3) | 16 |
| $c_0$ (DPCM quantized) | 3 | 1) | 17 |
| logE (DPCM quantized) | 3 | 2) | 18 |
| $DCT_{1.7}$ - $DCT_{12.7}$ | 12 * 2 | 3) | 19 |
| $c_0$ (DPCM quantized) | 3 | 1) | 20 |
| logE (DPCM quantized) | 3 | 2) | 21 |
| $DCT_{1.8}$ - $DCT_{12.8}$ | 1 + 11 * 2 | 3) | 22 |
| $c_0$ (DPCM quantized) | 3 | 1) | 23 |
| logE (DPCM quantized) | 3 | 2) | 24 |
| 1) This field is optional. It is included when the $c_0$ flag has the value "1".<br>2) This field is optional. It is included when the logE flag has the value "1 ".<br>3) The detailed bit allocation is found in Table 2. | | | |

The fields within Table 10 are transmitted in ascending order according to the field index; inside a field, the parameters are transmitted in ascending order according to their subindices. Inside a parameter, the least significant bit is the first to be transmitted.

**CRC field**

The 8-bit CRC provides an error detection capability across the entire multiframe.

The 8-bit CRC field contains the remainder of the division (modulo 2) by the generator polynomial $p(x) = x^8 + x^2 + x + 1$ of the product $x^8$ multiplied by the content of the multiframe, excluding the CRC field. The polynomial representing the content of the multiframe is generated using bit number 1 (EIF) of the first octet (Header) as the coefficient of the highest-order term.

As a typical implementation in the transmitter, the initial content of the register of the device computing the remainder of the division is preset to all 0's and is then modified by division by the generator polynomial (as described above) of the content of the multiframe, not including the bits in the CRC field; the resulting remainder is transmitted as the 8-bit CRC. The coefficient of the highest-order term of the remainder polynomial corresponds to bit number 1 of the CRC field. Receivers should discard any multiframe whose CRC field fails the error check.

**Bit rate of the compression algorithm**

When the feature stream is combined with the overhead of the synchronisation flag, the header and the CRC field, the bit rates given in Table 11 result for the complete feature compression algorithm. In this calculation, the Extra Information Field (EI) is assumed to be empty.

Table 11

| Bit rates of the compression algorithm | | | |
|---|---|---|---|
| | C0="0" and LOGE="0" | C0="1" and LOGE="0" or C0="0" and LOGE="1" | C0="1" and LOGE="1" |
| Multiframe length (octets) | 225 | 245 | 264 |
| Bit rate (bits/s) | 3867 | 4200 | 4517 |

**Feature vector decompression**

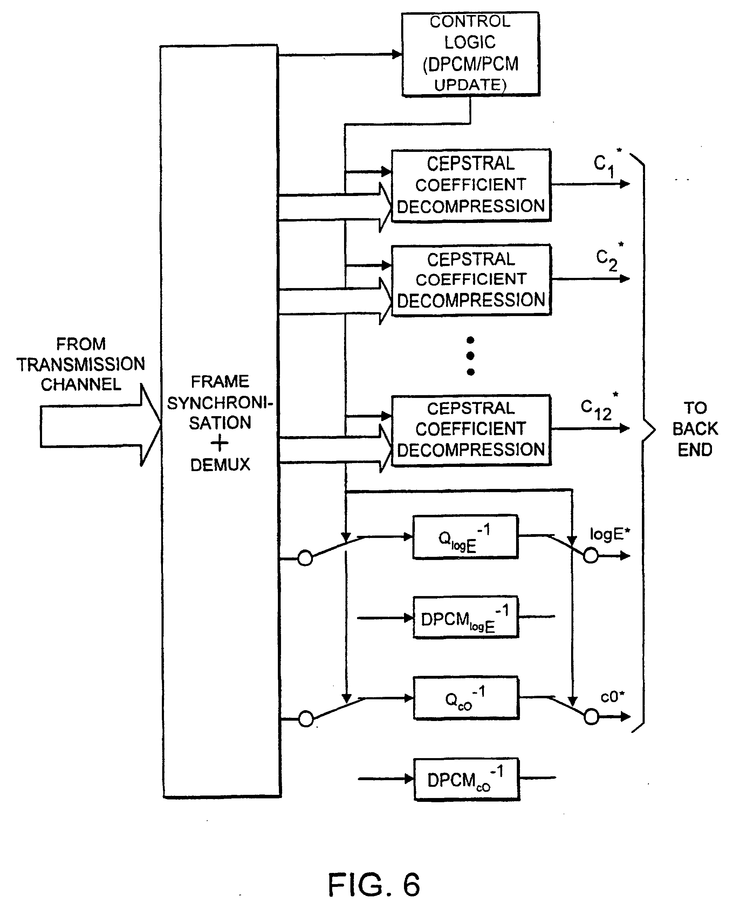

Turning now to the decoding process at the receiver side, this consists of the inverse operations of encoding in reverse order. Figure 6 shows the main functional blocks of the decoder. For cepstral coefficients $c_1..c_{12}$ cepstral coefficient decompression is applied, for the energy measures either PCM or DPCM decoding is performed. It should be noted that the suffix denotes decoded (or receiver side) signals.

**Decoding $DCT_{x,1}$**

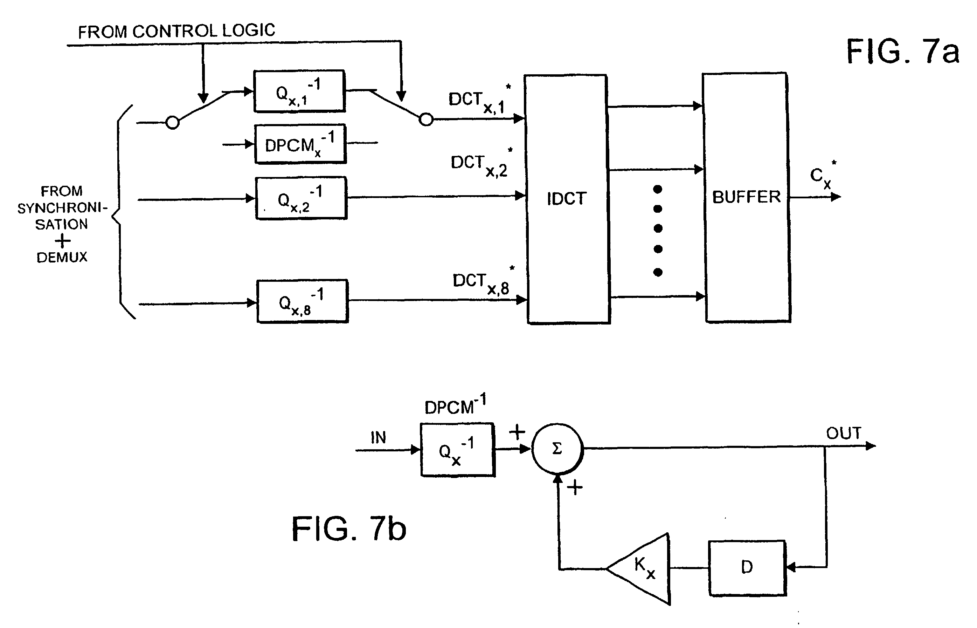

Demultiplexed codewords are mapped into floating-point samples ($DCT_{x,1}$*) using either DPCM decoding ($DPCM_x{}^{-1}$) or PCM de-quantisation (decoding part of quantisation, $Q_{x,1}{}^{-1}$), depending on the DPCM / PCM switch.
The details of DPCM decoding are shown in Figure 7b. The output is produced as a sum of the de-quantized residual plus the prediction from the last output value. Predictor coefficients $k_x$ can be found in the Appendix (table $DCT\_PRED$). The decoding part of the quantisation can be considered as a table look-up according to the incoming table indices. Every encoded sample value belonging to $Cell_k$ is represented by the centroid value of the cell. Quantiser cell centroids can be found in the Appendix (tables $DCT\_x\_1\_DPCM, x=1..12$).
The decoding part of uniform quantisation ($Q_{x,1}{}^{-1}$) consists of binary-to-decimal conversion, shifting to cell midpoint, scaling and shifting:

$$Out_i = \frac{\left(bin2dec\{Cod_i\} + 0.5\right) \cdot \left(Max - Min\right)}{2^B} + Min,$$

where $Cod_i$ and $Out_i$ stand for the input codeword and the output representation level, respectively, at time instant $t_i$. $Min$ and $Max$ values are tabulated in Appendix (tables $DCT\_MIN$ and $DCT\_MAX,$ respectively).

**Decoding $DCT_{x,1}$**

Decoding of receiver side DCT coefficients $DCT_{x,2...8}{}^{*}$ is a table look-up for centroid values, similarly to $Q_{x,1}{}^{-1}$. Quantiser centroid values can be found in the Appendix (tables $DCT\_x\_y\_PCM, x=1..12, y=2..8$).

**Inverse transform**

Decoded DCT coefficients $DCT_{x,1...8}^*$ are inverse DCT transformed (*IDCT*) and the result is stored in a buffer (*Buff.*),

$$\begin{bmatrix} c_{x,j}^* \\ c_{x,j+1}^* \\ \cdots \\ c_{x,j+7}^* \end{bmatrix} = T^{-1} \cdot \begin{bmatrix} (DCT_{x,1}^*)_i \\ (DCT_{x,2}^*)_i \\ \cdots \\ (DCT_{x,8}^*)_i \end{bmatrix}, \quad x = 1...12,$$

where $c_{x,j}^*$ is the receiver side cepstral coefficient $c_x^*$, at time instant $t_j$, and $(DCT_{x,y})_i^*$ is the yth DCT coefficient of receiver side cepstral coefficient $c_x^*$, at time instant $t_j$. The elements of $T^{-1}$ IDCT transformation matrix are calculated according to the following equation,

$$T^{-1}_{k,n} = \alpha \cdot \cos\left[\left(k + \frac{1}{2}\right)\frac{n\pi}{8}\right],$$

*where*
$\alpha = \frac{1}{16}$, *if n = 0, and* $\alpha = \frac{1}{8}$ *otherwise.*
$k$, and $n$ stand for the row and the column numbers, respectively. $k,n$=0,...,7.

Synchronised reading from the buffer ensures that one sample is read out from the output buffer when a new $logE^*/c_0^*$ pair arrives. The uppermost sample $c_{x,j}^*$ is read first.

**Decoding logE\* and c₀\***

The zeroth cepstral coefficient and log energy component on the receiver side ($c0^*$ and $logE^*$, respectively) are reconstructed using either DPCM decoding or PCM de-quantisation depending on the DPCM / PCM switch, similarly to the decoding of $DCT_{x,1}^*$. The corresponding predictor coefficients and quantiser centroids can be found in the Appendix (variables *C0_PRED* and *LOG_E_PRED* contain the predictor coefficients, and tables *C0_DPCM* and *LOG_E_DPCM* contain the quantiser centroids).

**Algorithmic and synchronisation delays**

As was previously mentioned, feature vectors can be encoded and decoded on a frame basis. Assuming one feature vector in every 10ms, the algorithmic delay of the compression scheme becomes 8*10=80ms. Multiframes can be considered as basic units for synchronization. If an unrecoverable error occurs in the transmission chain, the system can resynchronize within 6*80=480ms. In a practical situation, feature vectors are decoded and used frame by frame. If a transmission error is detected on the multiframe level, the system notifies the BE at the end of a multiframe that some of the latest feature vectors are erroneous. The error-handling procedure depends on the BE.

**Bit rates**

The total bit-rate of the compression algorithm can be calculated as follows. One multiframe consists of six frames, a PCM frame and five DPCM frames. In a PCM frame 12x12 bits are used for the PCM update of the first DCT coefficients ($DCT_{x,1}$) of cepstral coefficients $c_1..c_{12}$. 12x18 bits are needed for encoding the rest of the DCT coefficients ($DCT_{x,2..8}$). $c_0$ requires 12 bits for PCM update and 7x3 bits for DPCM encoding the remaining seven values in the block. The same holds for logE. In the DPCM frames 12x6 bits are used for $DCT_{x,1}$, 12x18 bits for $DCT_{x,2..8}$, 8x3 bit for $c_0$ and 8x3 bit for logE. The total amount of bits in a multiframe is then 12x12+12x18+12+7x3+12+7x3 + 5x (12x6+12x18+8x3+8x3) = 2106bits. The length of a multiframe is 480ms. This corresponds to a bitrate of 4387.5bps. If only one of the energy measures is transmitted, the total bitrate is 4068.75bps. In the preferred embodiment, together with the framing overhead, the bit rates are 4517 and 4200 bps, respectively.

**Memory requirement**

The memory requirement of the algorithm can be approximated as the memory needed for storing the quantizer tables. The uniform quantizers used for PCM updates need no extensive quantizer tables, only the minimum and maximum values are stored, that is $(12+2) \times 2 \times 4$ bytes are needed. For DPCM residual quantization of the first DCT coefficients $12 \times 64 \times 4$ bytes are required. The rest of the DCT coefficients require $(32+8+8+4+4+4+2) \times 4$ bytes (for $c_1$) and $11 \times (16+8+8+4+4+4+4) \times 4$ bytes (for $c_2..c_{12}$). DPCM residual quantization of $c_0$ and logE requires $2 \times 8 \times 4$ bytes. The total amount is 5608 bytes.

The present invention may be embodied in other specific forms without departing from its essential attributes. Accordingly reference should be made to the appended claims and other general statements herein rather than to the foregoing description as indicating the scope of invention.

Furthermore, each feature disclosed in this specification (which term includes the claims) and/or shown in the drawings may be incorporated in the invention independently of other disclosed and/or illustrated features. In this regard, the invention includes any novel feature or combination of features disclosed herein either explicitly or any generalisation thereof irrespective of whether or not it relates to the claimed invention or mitigates any or all of the problems addressed.

DCT_x_1_DPCM, x=1..3

EP 1 121 686 B1

| | $c_1$ | | | | $c_2$ | | | | $c_3$ | |
|---|---|---|---|---|---|---|---|---|---|---|
| 1 | -1.5682377E+03 | 33 | -1.1406672E+02 | 1 | -1.1549435E+03 | 33 | -6.0178699E+01 | 1 | -1.4091539E+03 | 33 | -6.1884515E+01 |
| 2 | -1.4053310E+03 | 34 | -8.9766661E+01 | 2 | -1.0173631E+03 | 34 | -4.2918918E+01 | 2 | -1.2166551E+03 | 34 | -4.1533147E+01 |
| 3 | -1.2961137E+03 | 35 | -6.5462776E+01 | 3 | -9.2722673E+02 | 35 | -2.5588266E+01 | 3 | -1.0983367E+03 | 35 | -2.0909333E+01 |
| 4 | -1.2092788E+03 | 36 | -4.1559419E+01 | 4 | -8.5845937E+02 | 36 | -7.8573620E+00 | 4 | -1.0090556E+03 | 36 | 5.4502300E-01 |
| 5 | -1.1360982E+03 | 37 | -1.7409374E+01 | 5 | -7.9942421E+02 | 37 | 1.0585990E+01 | 5 | -9.3373639E+02 | 37 | 2.2825283E+01 |
| 6 | -1.0714859E+03 | 38 | 7.0806410E+00 | 6 | -7.4724823E+02 | 38 | 2.9694185E+01 | 6 | -8.6874621E+02 | 38 | 4.5882267E+01 |
| 7 | -1.0118089E+03 | 39 | 3.1677694E+01 | 7 | -7.0054297E+02 | 39 | 4.9149706E+01 | 7 | -8.1003802E+02 | 39 | 6.9118023E+01 |
| 8 | -9.5615844E+02 | 40 | 5.6555378E+01 | 8 | -6.5931998E+02 | 40 | 6.8848032E+01 | 8 | -7.5799452E+02 | 40 | 9.2485160E+01 |
| 9 | -9.0370701E+02 | 41 | 8.2244683E+01 | 9 | -6.2096121E+02 | 41 | 8.8787481E+01 | 9 | -7.1097372E+02 | 41 | 1.1613384E+02 |
| 10 | -8.5332478E+02 | 42 | 1.0807129E+02 | 10 | -5.8507830E+02 | 42 | 1.0879500E+02 | 10 | -6.6716720E+02 | 42 | 1.4026325E+02 |
| 11 | -8.0660074E+02 | 43 | 1.3425777E+02 | 11 | -5.5224966E+02 | 43 | 1.2942333E+02 | 11 | -6.2639109E+02 | 43 | 1.6446570E+02 |
| 12 | -7.6111982E+02 | 44 | 1.6145719E+02 | 12 | -5.2147260E+02 | 44 | 1.5040959E+02 | 12 | -5.8814066E+02 | 44 | 1.8975676E+02 |
| 13 | -7.1655469E+02 | 45 | 1.8931782E+02 | 13 | -4.9226521E+02 | 45 | 1.7185427E+02 | 13 | -5.5326969E+02 | 45 | 2.1576475E+02 |
| 14 | -6.7410627E+02 | 46 | 2.1826612E+02 | 14 | -4.6473657E+02 | 46 | 1.9431273E+02 | 14 | -5.1993438E+02 | 46 | 2.4276746E+02 |
| 15 | -6.3280539E+02 | 47 | 2.4827293E+02 | 15 | -4.3837414E+02 | 47 | 2.1756348E+02 | 15 | -4.8823740E+02 | 47 | 2.7099810E+02 |
| 16 | -5.9420078E+02 | 48 | 2.7951714E+02 | 16 | -4.1274763E+02 | 48 | 2.4144004E+02 | 16 | -4.5757507E+02 | 48 | 3.0051819E+02 |
| 17 | -5.5683057E+02 | 49 | 3.1234929E+02 | 17 | -3.8770409E+02 | 49 | 2.6622790E+02 | 17 | -4.2911134E+02 | 49 | 3.3120718E+02 |
| 18 | -5.2105370E+02 | 50 | 3.4647428E+02 | 18 | -3.6348731E+02 | 50 | 2.9163964E+02 | 18 | -4.0182423E+02 | 50 | 3.6291643E+02 |
| 19 | -4.8645794E+02 | 51 | 3.8220908E+02 | 19 | -3.3973775E+02 | 51 | 3.1811166E+02 | 19 | -3.7539313E+02 | 51 | 3.9604861E+02 |
| 20 | -4.5320376E+02 | 52 | 4.1995756E+02 | 20 | -3.1659212E+02 | 52 | 3.4607827E+02 | 20 | -3.4925907E+02 | 52 | 4.3181846E+02 |
| 21 | -4.2152023E+02 | 53 | 4.5933605E+02 | 21 | -2.9464013E+02 | 53 | 3.7502716E+02 | 21 | -3.2372406E+02 | 53 | 4.6959147E+02 |
| 22 | -3.9123282E+02 | 54 | 5.0024110E+02 | 22 | -2.7302600E+02 | 54 | 4.0643914E+02 | 22 | -2.9927378E+02 | 54 | 5.1047235E+02 |
| 23 | -3.6208333E+02 | 55 | 5.4386321E+02 | 23 | -2.5200312E+02 | 55 | 4.3980648E+02 | 23 | -2.7584615E+02 | 55 | 5.5454072E+02 |
| 24 | -3.3346888E+02 | 56 | 5.9093777E+02 | 24 | -2.3119047E+02 | 56 | 4.7482579E+02 | 24 | -2.5268278E+02 | 56 | 6.0312854E+02 |
| 25 | -3.0592745E+02 | 57 | 6.4053061E+02 | 25 | -2.1121251E+02 | 57 | 5.1327556E+02 | 25 | -2.2969788E+02 | 57 | 6.5722630E+02 |
| 26 | -2.7998290E+02 | 58 | 6.9448652E+02 | 26 | -1.9141719E+02 | 58 | 5.5633550E+02 | 26 | -2.0741609E+02 | 58 | 7.1629063E+02 |
| 27 | -2.5516264E+02 | 59 | 7.5300940E+02 | 27 | -1.7192766E+02 | 59 | 6.0569879E+02 | 27 | -1.8536597E+02 | 59 | 7.8392058E+02 |
| 28 | -2.3137501E+02 | 60 | 8.1713935E+02 | 28 | -1.5297579E+02 | 60 | 6.6142668E+02 | 28 | -1.6379818E+02 | 60 | 8.6175955E+02 |
| 29 | -2.0846503E+02 | 61 | 8.9112323E+02 | 29 | -1.3393493E+02 | 61 | 7.2748484E+02 | 29 | -1.4266413E+02 | 61 | 9.5168274E+02 |
| 30 | -1.8538314E+02 | 62 | 9.7313878E+02 | 30 | -1.1504620E+02 | 62 | 8.0922652E+02 | 30 | -1.2221693E+02 | 62 | 1.0593524E+03 |
| 31 | -1.6186218E+02 | 63 | 1.0789388E+03 | 31 | -9.6470231E+01 | 63 | 9.1471110E+02 | 31 | -1.0223160E+02 | 63 | 1.2060560E+03 |
| 32 | -1.3811044E+02 | 64 | 1.2269995E+03 | 32 | -7.8197053E+01 | 64 | 1.0879838E+03 | 32 | -8.2164641E+01 | 64 | 1.4337489E+03 |

DCT_x_1_DPCM, x=4..6

| | $c_4$ | | | | $c_5$ | | | | $c_6$ | | |
|---|---|---|---|---|---|---|---|---|---|---|---|
| 1 | -1.6059557E+03 | 33 | -9.2000731E+01 | 1 | -1.4484071E+03 | 33 | -7.2976635E+01 | 1 | -1.5720021E+03 | 33 | -6.6383618E+01 |
| 2 | -1.3645739E+03 | 34 | -7.0862664E+01 | 2 | -1.2415889E+03 | 34 | -5.5738336E+01 | 2 | -1.3290838E+03 | 34 | -4.8199730E+01 |
| 3 | -1.2217509E+03 | 35 | -5.0205447E+01 | 3 | -1.1148955E+03 | 35 | -3.8346252E+01 | 3 | -1.1862542E+03 | 35 | -3.0406617E+01 |
| 4 | -1.1189261E+03 | 36 | -3.0279811E+01 | 4 | -1.0213990E+03 | 36 | -2.0841103E+01 | 4 | -1.0776631E+03 | 36 | -1.2905759E+01 |
| 5 | -1.0343389E+03 | 37 | -1.0555313E+01 | 5 | -9.4139842E+02 | 37 | -2.9915550E+00 | 5 | -9.8789743E+02 | 37 | 4.7134680E+00 |
| 6 | -9.6348897E+02 | 38 | 9.6791450E+00 | 6 | -8.7171861E+02 | 38 | 1.5488669E+01 | 6 | -9.1223749E+02 | 38 | 2.2223143E+01 |
| 7 | -9.0106968E+02 | 39 | 3.0640409E+01 | 7 | -8.1167799E+02 | 39 | 3.4269872E+01 | 7 | -8.4679957E+02 | 39 | 3.9821503E+01 |
| 8 | -8.4546884E+02 | 40 | 5.1843639E+01 | 8 | -7.5713039E+02 | 40 | 5.3653015E+01 | 8 | -7.8955897E+02 | 40 | 5.7846624E+01 |
| 9 | -7.9537130E+02 | 41 | 7.3653721E+01 | 9 | -7.0746196E+02 | 41 | 7.3589505E+01 | 9 | -7.3609885E+02 | 41 | 7.6263169E+01 |
| 10 | -7.4951014E+02 | 42 | 9.5994290E+01 | 10 | -6.6215823E+02 | 42 | 9.3597592E+01 | 10 | -6.8944875E+02 | 42 | 9.4745607E+01 |
| 11 | -7.0587315E+02 | 43 | 1.1830887E+02 | 11 | -6.2009528E+02 | 43 | 1.1402888E+02 | 11 | -6.4653905E+02 | 43 | 1.1383381E+02 |
| 12 | -6.6501510E+02 | 44 | 1.4116931E+02 | 12 | -5.8237495E+02 | 44 | 1.3501757E+02 | 12 | -6.0594701E+02 | 44 | 1.3335239E+02 |
| 13 | -6.2638260E+02 | 45 | 1.6448524E+02 | 13 | -5.4719128E+02 | 45 | 1.5656804E+02 | 13 | -5.6731575E+02 | 45 | 1.5325934E+02 |
| 14 | -5.8836577E+02 | 46 | 1.8846979E+02 | 14 | -5.1346645E+02 | 46 | 1.7891200E+02 | 14 | -5.3032962E+02 | 46 | 1.7371262E+02 |
| 15 | -5.5241301E+02 | 47 | 2.1299036E+02 | 15 | -4.8253723E+02 | 47 | 2.0167162E+02 | 15 | -4.9570788E+02 | 47 | 1.9509796E+02 |
| 16 | -5.1872838E+02 | 48 | 2.3847179E+02 | 16 | -4.5272588E+02 | 48 | 2.2521648E+02 | 16 | -4.6315709E+02 | 48 | 2.1780158E+02 |
| 17 | -4.8752677E+02 | 49 | 2.6525173E+02 | 17 | -4.2410555E+02 | 49 | 2.5005653E+02 | 17 | -4.3307162E+02 | 49 | 2.4185008E+02 |
| 18 | -4.5840433E+02 | 50 | 2.9321658E+02 | 18 | -3.9687802E+02 | 50 | 2.7600060E+02 | 18 | -4.0466014E+02 | 50 | 2.6702797E+02 |
| 19 | -4.3003003E+02 | 51 | 3.2252610E+02 | 19 | -3.7102903E+02 | 51 | 3.0303285E+02 | 19 | -3.7742894E+02 | 51 | 2.9381569E+02 |
| 20 | -4.0288080E+02 | 52 | 3.5296518E+02 | 20 | -3.4563941E+02 | 52 | 3.3165113E+02 | 20 | -3.5116059E+02 | 52 | 3.2197902E+02 |
| 21 | -3.7617438E+02 | 53 | 3.8591086E+02 | 21 | -3.2148394E+02 | 53 | 3.6227365E+02 | 21 | -3.2591926E+02 | 53 | 3.5184814E+02 |
| 22 | -3.5025546E+02 | 54 | 4.2084517E+02 | 22 | -2.9766153E+02 | 54 | 3.9419270E+02 | 22 | -3.0125420E+02 | 54 | 3.8321758E+02 |
| 23 | -3.2480902E+02 | 55 | 4.5749134E+02 | 23 | -2.7396778E+02 | 55 | 4.2892095E+02 | 23 | -2.7705152E+02 | 55 | 4.1625555E+02 |
| 24 | -2.9977566E+02 | 56 | 4.9740157E+02 | 24 | -2.5123052E+02 | 56 | 4.6566281E+02 | 24 | -2.5315227E+02 | 56 | 4.5239961E+02 |
| 25 | -2.7522095E+02 | 57 | 5.3904730E+02 | 25 | -2.2914601E+02 | 57 | 5.0538721E+02 | 25 | -2.2983925E+02 | 57 | 4.9181970E+02 |
| 26 | -2.5077411E+02 | 58 | 5.8407800E+02 | 26 | -2.0789981E+02 | 58 | 5.4991103E+02 | 26 | -2.0690506E+02 | 58 | 5.3471716E+02 |
| 27 | -2.2686826E+02 | 59 | 6.3447909E+02 | 27 | -1.8704147E+02 | 59 | 5.9858100E+02 | 27 | -1.8498225E+02 | 59 | 5.8372268E+02 |
| 28 | -2.0322732E+02 | 60 | 6.9516748E+02 | 28 | -1.6687333E+02 | 60 | 6.5266884E+02 | 28 | -1.6399466E+02 | 60 | 6.3985007E+02 |
| 29 | -1.7975794E+02 | 61 | 7.6501752E+02 | 29 | -1.4732699E+02 | 61 | 7.1847113E+02 | 29 | -1.4346977E+02 | 61 | 7.0742411E+02 |
| 30 | -1.5705753E+02 | 62 | 8.5114552E+02 | 30 | -1.2823415E+02 | 62 | 7.9754094E+02 | 30 | -1.2375817E+02 | 62 | 7.9105358E+02 |
| 31 | -1.3499748E+02 | 63 | 9.6463553E+02 | 31 | -1.0916089E+02 | 63 | 9.0195719E+02 | 31 | -1.0438324E+02 | 63 | 9.0394925E+02 |
| 32 | -1.1330048E+02 | 64 | 1.1619248E+03 | 32 | -9.0867970E+01 | 64 | 1.0672456E+03 | 32 | -8.5170368E+01 | 64 | 1.0817146E+03 |

DCT_x_1_DPCM, x=7..9

| | $c_7$ | | | | $c_8$ | | | | $c_9$ | | |
|---|---|---|---|---|---|---|---|---|---|---|---|
| 1 | -1.7079247E+03 | 33 | -5.9321434E+01 | 1 | -1.2355031E+03 | 33 | -3.0621464E+01 | 1 | -1.1529626E+03 | 33 | -3.7163662E+01 |
| 2 | -1.4346063E+03 | 34 | -4.0999114E+01 | 2 | -1.0593999E+03 | 34 | -1.4893579E+01 | 2 | -9.8579664E+02 | 34 | -2.2273251E+01 |
| 3 | -1.2794603E+03 | 35 | -2.2815460E+01 | 3 | -9.5077545E+02 | 35 | 9.4684600E-01 | 3 | -8.7186065E+02 | 35 | -7.1087340E+00 |
| 4 | -1.1642928E+03 | 36 | -4.6713050E+00 | 4 | -8.6705929E+02 | 36 | 1.7160252E+01 | 4 | -7.8892953E+02 | 36 | 8.1744430E+00 |
| 5 | -1.0594240E+03 | 37 | 1.3856686E+01 | 5 | -7.9323262E+02 | 37 | 3.3538761E+01 | 5 | -7.2228225E+02 | 37 | 2.3682178E+01 |
| 6 | -9.7125540E+02 | 38 | 3.2623901E+01 | 6 | -7.3053572E+02 | 38 | 5.0196526E+01 | 6 | -6.6761744E+02 | 38 | 3.9527850E+01 |
| 7 | -8.9402817E+02 | 39 | 5.1330361E+01 | 7 | -6.7463693E+02 | 39 | 6.7507884E+01 | 7 | -6.2021987E+02 | 39 | 5.5584149E+01 |
| 8 | -8.2645272E+02 | 40 | 7.0484995E+01 | 8 | -6.2559003E+02 | 40 | 8.5014115E+01 | 8 | -5.7882584E+02 | 40 | 7.1939535E+01 |
| 9 | -7.6593562E+02 | 41 | 8.9952336E+01 | 9 | -5.8038097E+02 | 41 | 1.0307900E+02 | 9 | -5.3985426E+02 | 41 | 8.8491637E+01 |
| 10 | -7.1052508E+02 | 42 | 1.0976682E+02 | 10 | -5.3966598E+02 | 42 | 1.2182463E+02 | 10 | -5.0360824E+02 | 42 | 1.0565858E+02 |
| 11 | -6.5999523E+02 | 43 | 1.3010448E+02 | 11 | -5.0282510E+02 | 43 | 1.4102690E+02 | 11 | -4.7166094E+02 | 43 | 1.2337477E+02 |
| 12 | -6.1386780E+02 | 44 | 1.5095078E+02 | 12 | -4.6851621E+02 | 44 | 1.6089044E+02 | 12 | -4.4247105E+02 | 44 | 1.4137849E+02 |
| 13 | -5.7199209E+02 | 45 | 1.7205466E+02 | 13 | -4.3654996E+02 | 45 | 1.8111659E+02 | 13 | -4.1498235E+02 | 45 | 1.6010146E+02 |
| 14 | -5.3287556E+02 | 46 | 1.9385456E+02 | 14 | -4.0656204E+02 | 46 | 2.0237320E+02 | 14 | -3.8878501E+02 | 46 | 1.7950589E+02 |
| 15 | -4.9679254E+02 | 47 | 2.1585029E+02 | 15 | -3.7859153E+02 | 47 | 2.2460986E+02 | 15 | -3.6408849E+02 | 47 | 1.9961890E+02 |
| 16 | -4.6347281E+02 | 48 | 2.3865896E+02 | 16 | -3.5234218E+02 | 48 | 2.4813807E+02 | 16 | -3.4043966E+02 | 48 | 2.2046965E+02 |
| 17 | -4.3208961E+02 | 49 | 2.6263822E+02 | 17 | -3.2727154E+02 | 49 | 2.7264766E+02 | 17 | -3.1756249E+02 | 49 | 2.4222824E+02 |
| 18 | -4.0205387E+02 | 50 | 2.8772177E+02 | 18 | -3.0381539E+02 | 50 | 2.9794935E+02 | 18 | -2.9604173E+02 | 50 | 2.6555971E+02 |
| 19 | -3.7326843E+02 | 51 | 3.1441630E+02 | 19 | -2.8178821E+02 | 51 | 3.2478486E+02 | 19 | -2.7531267E+02 | 51 | 2.9004919E+02 |
| 20 | -3.4561751E+02 | 52 | 3.4298337E+02 | 20 | -2.6019338E+02 | 52 | 3.5316355E+02 | 20 | -2.5530095E+02 | 52 | 3.1599008E+02 |
| 21 | -3.1936179E+02 | 53 | 3.7364616E+02 | 21 | -2.3948004E+02 | 53 | 3.8289446E+02 | 21 | -2.3591671E+02 | 53 | 3.4374180E+02 |
| 22 | -2.9386829E+02 | 54 | 4.0733714E+02 | 22 | -2.1949807E+02 | 54 | 4.1495135E+02 | 22 | -2.1668054E+02 | 54 | 3.7297312E+02 |
| 23 | -2.6887105E+02 | 55 | 4.4277726E+02 | 23 | -2.0006567E+02 | 55 | 4.4940935E+02 | 23 | -1.9784767E+02 | 55 | 4.0487060E+02 |
| 24 | -2.4490300E+02 | 56 | 4.8026762E+02 | 24 | -1.8168460E+02 | 56 | 4.8678225E+02 | 24 | -1.7979794E+02 | 56 | 4.3887293E+02 |
| 25 | -2.2172596E+02 | 57 | 5.2106386E+02 | 25 | -1.6355704E+02 | 57 | 5.2875309E+02 | 25 | -1.6229460E+02 | 57 | 4.7429222E+02 |
| 26 | -1.9938378E+02 | 58 | 5.6424449E+02 | 26 | -1.4565725E+02 | 58 | 5.7535495E+02 | 26 | -1.4526625E+02 | 58 | 5.1500364E+02 |
| 27 | -1.7742603E+02 | 59 | 6.1149846E+02 | 27 | -1.2822236E+02 | 59 | 6.2697362E+02 | 27 | -1.2866800E+02 | 59 | 5.6224125E+02 |
| 28 | -1.5621532E+02 | 60 | 6.6666441E+02 | 28 | -1.1095209E+02 | 60 | 6.8490709E+02 | 28 | -1.1279048E+02 | 60 | 6.1529210E+02 |
| 29 | -1.3567892E+02 | 61 | 7.3311831E+02 | 29 | -9.4409031E+01 | 61 | 7.5431208E+02 | 29 | -9.7252193E+01 | 61 | 6.7557499E+02 |
| 30 | -1.1600954E+02 | 62 | 8.1744574E+02 | 30 | -7.8231728E+01 | 62 | 8.3888704E+02 | 30 | -8.2163486E+01 | 62 | 7.5398882E+02 |
| 31 | -9.6768408E+01 | 63 | 9.3171590E+02 | 31 | -6.2060228E+01 | 63 | 9.3774142E+02 | 31 | -6.7076295E+01 | 63 | 8.5129828E+02 |
| 32 | -7.7752067E+01 | 64 | 1.1068608E+03 | 32 | -4.6318728E+01 | 64 | 1.0956921E+03 | 32 | -5.2139579E+01 | 64 | 1.0087282E+03 |

EP 1 121 686 B1

DCT_x_1_DPCM, x=10..12

| | $c_{10}$ | | | | $c_{11}$ | | | | $c_{12}$ | | |
|---|---|---|---|---|---|---|---|---|---|---|---|
| 1 | -1.1525205E+03 | 33 | -7.2674820E+00 | 1 | -1.0163768E+03 | 33 | -3.2182830E+00 | 1 | -9.1536694E+02 | 33 | -1.3961966E+01 |
| 2 | -9.6543917E+02 | 34 | 6.7361340E+00 | 2 | -8.5524150E+02 | 34 | 1.0342846E+01 | 2 | -7.7414384E+02 | 34 | -2.4087890E+00 |
| 3 | -8.5392375E+02 | 35 | 2.0672759E+01 | 3 | -7.5562077E+02 | 35 | 2.4083541E+01 | 3 | -6.8356725E+02 | 35 | 9.0445830E+00 |
| 4 | -7.6809066E+02 | 36 | 3.4795909E+01 | 4 | -6.7315029E+02 | 36 | 3.8031120E+01 | 4 | -6.2058685E+02 | 36 | 2.0471908E+01 |
| 5 | -6.9506020E+02 | 37 | 4.8977276E+01 | 5 | -6.0995655E+02 | 37 | 5.2123047E+01 | 5 | -5.6937191E+02 | 37 | 3.2006523E+01 |
| 6 | -6.3398567E+02 | 38 | 6.3634494E+01 | 6 | -5.5774653E+02 | 38 | 6.6320197E+01 | 6 | -5.2500244E+02 | 38 | 4.3864492E+01 |
| 7 | -5.8101939E+02 | 39 | 7.8511512E+01 | 7 | -5.1349070E+02 | 39 | 8.0947015E+01 | 7 | -4.8765865E+02 | 39 | 5.6008267E+01 |
| 8 | -5.3727598E+02 | 40 | 9.3942502E+01 | 8 | -4.7492230E+02 | 40 | 9.5816675E+01 | 8 | -4.5269880E+02 | 40 | 6.8282155E+01 |
| 9 | -4.9882394E+02 | 41 | 1.1003779E+02 | 9 | -4.3999809E+02 | 41 | 1.1091092E+02 | 9 | -4.2131533E+02 | 41 | 8.0902837E+01 |
| 10 | -4.6339594E+02 | 42 | 1.2641023E+02 | 10 | -4.0830350E+02 | 42 | 1.2649720E+02 | 10 | -3.9241439E+02 | 42 | 9.3733621E+01 |
| 11 | -4.3063608E+02 | 43 | 1.4335285E+02 | 11 | -3.8019183E+02 | 43 | 1.4264147E+02 | 11 | -3.6554590E+02 | 43 | 1.0676812E+02 |
| 12 | -4.0046485E+02 | 44 | 1.6078601E+02 | 12 | -3.5428357E+02 | 44 | 1.5960355E+02 | 12 | -3.4036239E+02 | 44 | 1.2013806E+02 |
| 13 | -3.7240637E+02 | 45 | 1.7860180E+02 | 13 | -3.3044547E+02 | 45 | 1.7719669E+02 | 13 | -3.1645892E+02 | 45 | 1.3390166E+02 |
| 14 | -3.4607185E+02 | 46 | 1.9718827E+02 | 14 | -3.0829131E+02 | 46 | 1.9555064E+02 | 14 | -2.9478806E+02 | 46 | 1.4799721E+02 |
| 15 | -3.2120705E+02 | 47 | 2.1640453E+02 | 15 | -2.8711337E+02 | 47 | 2.1481907E+02 | 15 | -2.7445054E+02 | 47 | 1.6291942E+02 |
| 16 | -2.9796747E+02 | 48 | 2.3642815E+02 | 16 | -2.6698883E+02 | 48 | 2.3434531E+02 | 16 | -2.5491693E+02 | 48 | 1.7837289E+02 |
| 17 | -2.7631941E+02 | 49 | 2.5766546E+02 | 17 | -2.4788457E+02 | 49 | 2.5480045E+02 | 17 | -2.3628446E+02 | 49 | 1.9445463E+02 |
| 18 | -2.5566085E+02 | 50 | 2.7950967E+02 | 18 | -2.2958515E+02 | 50 | 2.7646794E+02 | 18 | -2.1905515E+02 | 50 | 2.1138071E+02 |
| 19 | -2.3578657E+02 | 51 | 3.0231303E+02 | 19 | -2.1149602E+02 | 51 | 2.9934709E+02 | 19 | -2.0246808E+02 | 51 | 2.2891930E+02 |
| 20 | -2.1666471E+02 | 52 | 3.2697462E+02 | 20 | -1.9391217E+02 | 52 | 3.2325401E+02 | 20 | -1.8675468E+02 | 52 | 2.4802531E+02 |
| 21 | -1.9792053E+02 | 53 | 3.5285657E+02 | 21 | -1.7706492E+02 | 53 | 3.4838539E+02 | 21 | -1.7150113E+02 | 53 | 2.6766425E+02 |
| 22 | -1.7981677E+02 | 54 | 3.8046468E+02 | 22 | -1.6056271E+02 | 54 | 3.7587504E+02 | 22 | -1.5691822E+02 | 54 | 2.8888855E+02 |
| 23 | -1.6248733E+02 | 55 | 4.1013212E+02 | 23 | -1.4470963E+02 | 55 | 4.0544747E+02 | 23 | -1.4256904E+02 | 55 | 3.1219518E+02 |
| 24 | -1.4537547E+02 | 56 | 4.4307800E+02 | 24 | -1.2930691E+02 | 56 | 4.3773361E+02 | 24 | -1.2840480E+02 | 56 | 3.3785656E+02 |
| 25 | -1.2877352E+02 | 57 | 4.7891783E+02 | 25 | -1.1426188E+02 | 57 | 4.7364026E+02 | 25 | -1.1468078E+02 | 57 | 3.6741994E+02 |
| 26 | -1.1248405E+02 | 58 | 5.1843592E+02 | 26 | -9.9449259E+01 | 58 | 5.1247243E+02 | 26 | -1.0123093E+02 | 58 | 3.9961131E+02 |
| 27 | -9.6487658E+01 | 59 | 5.6235108E+02 | 27 | -8.5065653E+01 | 59 | 5.5910201E+02 | 27 | -8.8076621E+01 | 59 | 4.3551156E+02 |
| 28 | -8.0909793E+01 | 60 | 6.1369968E+02 | 28 | -7.0954600E+01 | 60 | 6.1090662E+02 | 28 | -7.5038479E+01 | 60 | 4.7729489E+02 |
| 29 | -6.5475825E+01 | 61 | 6.7224485E+02 | 29 | -5.7226776E+01 | 61 | 6.7049218E+02 | 29 | -6.2262299E+01 | 61 | 5.2735003E+02 |
| 30 | -5.0442640E+01 | 62 | 7.4816368E+02 | 30 | -4.3677230E+01 | 62 | 7.4801043E+02 | 30 | -4.9715321E+01 | 62 | 5.9056629E+02 |
| 31 | -3.5867259E+01 | 63 | 8.5227553E+02 | 31 | -3.0184476E+01 | 63 | 8.5252109E+02 | 31 | -3.7527979E+01 | 63 | 6.7510862E+02 |
| 32 | -2.1463129E+01 | 64 | 9.9610198E+02 | 32 | -1.6719611E+01 | 64 | 1.0082335E+03 | 32 | -2.5680014E+01 | 64 | 8.1384779E+02 |

DCT_x_y_PCM, x=1.6, y=2

| DCT_2 | c_1 |
|---|---|
| 17 | -4.8580396E+00 |
| 18 | 1.9208520E+01 |
| 19 | 3.5847856E+01 |
| 20 | 5.3915466E+01 |
| 21 | 7.3539502E+01 |
| 22 | 9.5344094E+01 |
| 23 | 1.1887158E+02 |
| 24 | 1.4519214E+02 |
| 25 | 1.7392692E+02 |
| 26 | 2.0480205E+02 |
| 27 | 2.3795111E+02 |
| 28 | 2.7428599E+02 |
| 29 | 3.1408352E+02 |
| 30 | 3.5924149E+02 |
| 31 | 4.1445525E+02 |
| 32 | 4.9020699E+02 |

| DCT_2 | c_2 | c_3 | c_4 | c_5 | c_6 |
|---|---|---|---|---|---|
| 1 | -3.3482660E+02 | -3.9303032E+02 | -3.9750029E+02 | -3.8169892E+02 | -4.0344066E+02 |
| 2 | -2.5075153E+02 | -2.8843667E+02 | -2.9549124E+02 | -2.8130172E+02 | -2.9263475E+02 |
| 3 | -1.9336313E+02 | -2.1939762E+02 | -2.2591972E+02 | -2.1542315E+02 | -2.2245857E+02 |
| 4 | -1.4825176E+02 | -1.6669756E+02 | -1.7060926E+02 | -1.6427128E+02 | -1.6976850E+02 |
| 5 | -1.1032763E+02 | -1.2238315E+02 | -1.2408769E+02 | -1.2129616E+02 | -1.2549530E+02 |
| 6 | -7.6941793E+01 | -8.3858150E+01 | -8.3189299E+01 | -8.3786319E+01 | -8.7330798E+01 |
| 7 | -4.6729734E+01 | -4.9652240E+01 | -4.6787229E+01 | -5.0519208E+01 | -5.2882085E+01 |
| 8 | -1.9140310E+01 | -1.8843244E+01 | -1.3484421E+01 | -1.9941533E+01 | -2.1405952E+01 |
| 9 | 6.7380040E+00 | 1.0628344E+01 | 1.7592027E+01 | 9.3347400E+00 | 8.8408710E+00 |
| 10 | 3.4298058E+01 | 4.1997697E+01 | 5.0292197E+01 | 4.0132373E+01 | 4.0051329E+01 |
| 11 | 6.4107774E+01 | 7.6393903E+01 | 8.6286746E+01 | 7.3053229E+01 | 7.3774635E+01 |
| 12 | 9.6472444E+01 | 1.1482759E+02 | 1.2677067E+02 | 1.0999982E+02 | 1.1139017E+02 |
| 13 | 1.3251921E+02 | 1.5835831E+02 | 1.7304079E+02 | 1.5249439E+02 | 1.5522090E+02 |
| 14 | 1.7452216E+02 | 2.1004316E+02 | 2.2762331E+02 | 2.0303871E+02 | 2.0758526E+02 |
| 15 | 2.2753102E+02 | 2.7586343E+02 | 2.9541739E+02 | 2.6684511E+02 | 2.7649192E+02 |
| 16 | 3.0713073E+02 | 3.7487367E+02 | 3.9673561E+02 | 3.6293655E+02 | 3.7996227E+02 |

DCT_x_y_PCM, x=7  12, y=2

| $DCT_2$ | $c_7$ | $c_8$ | $c_9$ | $c_{10}$ | $c_{11}$ | $c_{12}$ |
|---|---|---|---|---|---|---|
| 1 | -4.0286496E+02 | -3.4809303E+02 | -3.2131922E+02 | -3.0638435E+02 | -2.7811497E+02 | -2.5145359E+02 |
| 2 | -2.9190417E+02 | -2.5338138E+02 | -2.3449616E+02 | -2.2187095E+02 | -2.0123492E+02 | -1.8210483E+02 |
| 3 | -2.2054246E+02 | -1.9002547E+02 | -1.7750785E+02 | -1.6743225E+02 | -1.5189602E+02 | -1.3712884E+02 |
| 4 | -1.6674162E+02 | -1.4175008E+02 | -1.3328426E+02 | -1.2608279E+02 | -1.1401730E+02 | -1.0298498E+02 |
| 5 | -1.2217759E+02 | -1.0192551E+02 | -9.6599422E+01 | -9.1787558E+01 | -8.2739592E+01 | -7.4804297E+01 |
| 6 | -8.3905056E+01 | -6.7718960E+01 | -6.5003307E+01 | -6.2062837E+01 | -5.5349561E+01 | -5.0259318E+01 |
| 7 | -4.9618108E+01 | -3.7106410E+01 | -3.6234172E+01 | -3.5024709E+01 | -3.0578303E+01 | -2.7755561E+01 |
| 8 | -1.8148402E+01 | -8.4927780E+00 | -9.0981660E+00 | -9.2997600E+00 | -7.0208250E+00 | -6.5781920E+00 |
| 9 | 1.2264227E+01 | 1.8707289E+01 | 1.6570215E+01 | 1.4846388E+01 | 1.5342758E+01 | 1.3693599E+01 |
| 10 | 4.4555678E+01 | 4.6642657E+01 | 4.3144916E+01 | 3.9739202E+01 | 3.8295128E+01 | 3.4446202E+01 |
| 11 | 7.9084199E+01 | 7.6851586E+01 | 7.1578445E+01 | 6.6211830E+01 | 6.3025861E+01 | 5.6582686E+01 |
| 12 | 1.1802703E+02 | 1.1049139E+02 | 1.0304335E+02 | 9.5510057E+01 | 9.0492833E+01 | 8.0869534E+01 |
| 13 | 1.6369839E+02 | 1.4992886E+02 | 1.3977154E+02 | 1.2950899E+02 | 1.2254529E+02 | 1.0890725E+02 |
| 14 | 2.1845538E+02 | 1.9798869E+02 | 1.8444424E+02 | 1.7058378E+02 | 1.6124898E+02 | 1.4292756E+02 |
| 15 | 2.9042240E+02 | 2.6029863E+02 | 2.4191537E+02 | 2.2391546E+02 | 2.1264430E+02 | 1.8805572E+02 |
| 16 | 3.9941134E+02 | 3.5408490E+02 | 3.3133701E+02 | 3.0710148E+02 | 2.9278227E+02 | 2.5757809E+02 |

DCT_x_y_PCM, x=1..12, y=3

| $DCT_j$ | $c_1$ | $c_2$ | $c_3$ | $c_4$ | $c_5$ | $c_6$ |
|---|---|---|---|---|---|---|
| 1 | -1.6634478E+02 | -1.6438099E+02 | -1.6872718E+02 | -1.9897823E+02 | -1.7511736E+02 | -1.7625613E+02 |
| 2 | -9.9091580E+01 | -9.6767536E+01 | -1.0024196E+02 | -1.1549580E+02 | -1.0101487E+02 | -1.0136101E+02 |
| 3 | -4.8612347E+01 | -5.2077019E+01 | -5.5074227E+01 | -6.2571067E+01 | -5.3162816E+01 | -5.2853002E+01 |
| 4 | -1.1211403E+01 | -1.7462406E+01 | -1.9571968E+01 | -2.2249153E+01 | -1.5449161E+01 | -1.4212704E+01 |
| 5 | 1.6898476E+01 | 1.1654651E+01 | 1.1012155E+01 | 1.2668072E+01 | 1.8478716E+01 | 2.1354196E+01 |
| 6 | 5.4863124E+01 | 4.4043686E+01 | 4.4612183E+01 | 5.1127941E+01 | 5.6082731E+01 | 6.1654406E+01 |
| 7 | 1.0747208E+02 | 8.5393035E+01 | 8.7373303E+01 | 9.9913849E+01 | 1.0383578E+02 | 1.1371223E+02 |
| 8 | 1.7622278E+02 | 1.4994032E+02 | 1.5236919E+02 | 1.7365666E+02 | 1.7804585E+02 | 1.9522193E+02 |

| $DCT_j$ | $c_7$ | $c_8$ | $c_9$ | $c_{10}$ | $c_{11}$ | $c_{12}$ |
|---|---|---|---|---|---|---|
| 1 | -1.7908687E+02 | -1.6964747E+02 | -1.6147395E+02 | -1.5354128E+02 | -1.3966746E+02 | -1.2442367E+02 |
| 2 | -1.0340041E+02 | -1.0021358E+02 | -9.3942333E+01 | -9.0533175E+01 | -8.2119325E+01 | -7.3177970E+01 |
| 3 | -5.4123021E+01 | -5.4562576E+01 | -4.9478920E+01 | -4.8729031E+01 | -4.4096092E+01 | -3.8907288E+01 |
| 4 | -1.4654759E+01 | -1.7967060E+01 | -1.3780764E+01 | -1.4984825E+01 | -1.2937851E+01 | -1.0845033E+01 |
| 5 | 2.1716073E+01 | 1.5752661E+01 | 1.8808078E+01 | 1.5661802E+01 | 1.5638216E+01 | 1.4952235E+01 |
| 6 | 6.2469776E+01 | 5.3362621E+01 | 5.4642103E+01 | 4.8863990E+01 | 4.6668000E+01 | 4.2974700E+01 |
| 7 | 1.1478842E+02 | 1.0043956E+02 | 9.9792948E+01 | 9.0590878E+01 | 8.5078776E+01 | 7.7491714E+01 |
| 8 | 1.9668839E+02 | 1.7344323E+02 | 1.6901818E+02 | 1.5471295E+02 | 1.4278471E+02 | 1.2930372E+02 |

DCT_x_y_PCM, x=1..12, y=4

| $DCT_4$ | $c_1$ | $c_2$ | $c_3$ | $c_4$ | $c_5$ | $c_6$ |
|---|---|---|---|---|---|---|
| 1 | -1.0584334E+02 | -1.2711297E+02 | -1.1196736E+02 | -1.2743821E+02 | -1.1932686E+02 | -1.2534136E+02 |
| 2 | -6.3209565E+01 | -6.9046263E+01 | -6.3928888E+01 | -7.3453059E+01 | -6.9549611E+01 | -7.3288773E+01 |
| 3 | -3.1443982E+01 | -3.5542455E+01 | -3.3805787E+01 | -3.9685550E+01 | -3.7315361E+01 | -3.9694277E+01 |
| 4 | -8.2121350E+00 | -1.1315171E+01 | -1.1080672E+01 | -1.3550178E+01 | -1.2069727E+01 | -1.3088443E+01 |
| 5 | 8.7098910E+00 | 8.4914750E+00 | 8.6195470E+00 | 8.9247720E+00 | 1.0277627E+01 | 1.0422097E+01 |
| 6 | 3.1134487E+01 | 3.2580413E+01 | 3.1590416E+01 | 3.4881006E+01 | 3.5819596E+01 | 3.7002372E+01 |
| 7 | 6.1923603E+01 | 6.5703647E+01 | 6.1763406E+01 | 6.8974710E+01 | 6.8414518E+01 | 7.0675619E+01 |
| 8 | 1.0380816E+02 | 1.2018082E+02 | 1.0932508E+02 | 1.2327516E+02 | 1.1864997E+02 | 1.2215168E+02 |

| $DCT_4$ | $c_7$ | $c_8$ | $c_9$ | $c_{10}$ | $c_{11}$ | $c_{12}$ |
|---|---|---|---|---|---|---|
| 1 | -1.2618449E+02 | -1.2167668E+02 | -1.1787130E+02 | -1.1283741E+02 | -1.0365605E+02 | -9.3390630E+01 |
| 2 | -7.4593032E+01 | -7.2086975E+01 | -6.9613355E+01 | -6.7406343E+01 | -6.1807965E+01 | -5.5167200E+01 |
| 3 | -4.0729766E+01 | -3.9247511E+01 | -3.7778676E+01 | -3.7133969E+01 | -3.3899922E+01 | -2.9593920E+01 |
| 4 | -1.3929622E+01 | -1.3205248E+01 | -1.2374486E+01 | -1.2726609E+01 | -1.1446100E+01 | -8.7044700E+00 |
| 5 | 1.0103815E+01 | 1.0095978E+01 | 1.0472293E+01 | 9.3019770E+00 | 8.8467620E+00 | 1.0043721E+01 |
| 6 | 3.6911326E+01 | 3.6241026E+01 | 3.6218905E+01 | 3.3967348E+01 | 3.1505517E+01 | 3.0760989E+01 |
| 7 | 7.0884535E+01 | 6.8910839E+01 | 6.8057727E+01 | 6.4715925E+01 | 5.9812379E+01 | 5.6490853E+01 |
| 8 | 1.2228258E+02 | 1.1811448E+02 | 1.1554576E+02 | 1.1059541E+02 | 1.0161342E+02 | 9.4511657E+01 |

DCT_x_y_PCM, x=1..12, y=5..6

| DCT₅ | $c_1$ | $c_2$ | $c_3$ | $c_4$ | $c_5$ | $c_6$ |
|---|---|---|---|---|---|---|
| 1 | -5.0111085E+01 | -5.6304703E+01 | -5.3469721E+01 | -6.1347603E+01 | -6.0896951E+01 | -6.3255881E+01 |
| 2 | -1.1099239E+01 | -1.2853623E+01 | -1.3257747E+01 | -1.5430675E+01 | -1.5473256E+01 | -1.5997001E+01 |
| 3 | 1.1119532E+01 | 1.4137714E+01 | 1.4255119E+01 | 1.5825681E+01 | 1.6505284E+01 | 1.7687518E+01 |
| 4 | 5.2327006E+01 | 5.8034330E+01 | 5.4801150E+01 | 6.0280109E+01 | 6.0912727E+01 | 6.4338092E+01 |

| DCT₅ | $c_7$ | $c_8$ | $c_9$ | $c_{10}$ | $c_{11}$ | $c_{12}$ |
|---|---|---|---|---|---|---|
| 1 | -6.4456973E+01 | -6.3455630E+01 | -6.3785001E+01 | -6.0788210E+01 | -5.7127203E+01 | -5.2395133E+01 |
| 2 | -1.6555064E+01 | -1.6327896E+01 | -1.7467400E+01 | -1.6550331E+01 | -1.5537021E+01 | -1.4319951E+01 |
| 3 | 1.7752724E+01 | 1.7533012E+01 | 1.6084521E+01 | 1.5761098E+01 | 1.4806159E+01 | 1.3727869E+01 |
| 4 | 6.5298097E+01 | 6.4502774E+01 | 6.2658341E+01 | 6.0219796E+01 | 5.6394432E+01 | 5.1827418E+01 |

| DCT₆ | $c_1$ | $c_2$ | $c_3$ | $c_4$ | $c_5$ | $c_6$ |
|---|---|---|---|---|---|---|
| 1 | -4.1258772E+01 | -4.2899442E+01 | -4.4511475E+01 | -4.9421221E+01 | -5.2173489E+01 | -5.4347606E+01 |
| 2 | -1.0244175E+01 | -8.2158400E+00 | -1.0719790E+01 | -1.1720809E+01 | -1.3202528E+01 | -1.3491367E+01 |
| 3 | 6.9727880E+00 | 1.3639514E+01 | 1.1697302E+01 | 1.4003678E+01 | 1.3457999E+01 | 1.4695066E+01 |
| 4 | 3.6244012E+01 | 5.0477919E+01 | 4.5009762E+01 | 5.2271478E+01 | 5.2010761E+01 | 5.5172839E+01 |

| DCT₆ | $c_7$ | $c_8$ | $c_9$ | $c_{10}$ | $c_{11}$ | $c_{12}$ |
|---|---|---|---|---|---|---|
| 1 | -5.5935388E+01 | -5.4801934E+01 | -5.4923544E+01 | -5.2683654E+01 | -4.9372215E+01 | -4.5327710E+01 |
| 2 | -1.4177287E+01 | -1.3502989E+01 | -1.3912777E+01 | -1.3242601E+01 | -1.2458708E+01 | -1.1471105E+01 |
| 3 | 1.4844794E+01 | 1.5339919E+01 | 1.4590808E+01 | 1.4453276E+01 | 1.3557426E+01 | 1.2483952E+01 |
| 4 | 5.6219911E+01 | 5.6475843E+01 | 5.5342324E+01 | 5.3969671E+01 | 5.0432137E+01 | 4.6354 37E+01 |

DCT_x_y_PCM, x=1..12, y=7..8

| $DCT_7$ | $c_1$ | $c_2$ | $c_3$ | $c_4$ | $c_5$ | $c_6$ |
|---|---|---|---|---|---|---|
| 1 | -3.0734267E+01 | -3.7088204E+01 | -3.7855112E+01 | -4.4803675E+01 | -4.6297512E+01 | -4.9958974E+01 |
| 2 | -7.3374950E+00 | -8.0430590E+00 | -9.0776870E+00 | -1.1801887E+01 | -1.1840775E+01 | -1.3159138E+01 |
| 3 | 6.4319960E+00 | 9.8077330E+00 | 1.0070921E+01 | 1.0259931E+01 | 1.1479389E+01 | 1.1760891E+01 |
| 4 | 3.1067246E+01 | 3.9631036E+01 | 3.9221572E+01 | 4.3023929E+01 | 4.5691546E+01 | 4.8009221E+01 |

| $DCT_7$ | $c_7$ | $c_8$ | $c_9$ | $c_{10}$ | $c_{11}$ | $c_{12}$ |
|---|---|---|---|---|---|---|
| 1 | -5.0493175E+01 | -5.0581986E+01 | -5.0211243E+01 | -4.8716729E+01 | -4.5620956E+01 | -4.1612708E+01 |
| 2 | -1.3216465E+01 | -1.3166654E+01 | -1.3028090E+01 | -1.2825103E+01 | -1.2100114E+01 | -1.0362352E+01 |
| 3 | 1.2358582E+01 | 1.2437072E+01 | 1.2448363E+01 | 1.1722154E+01 | 1.1000078E+01 | 1.1142293E+01 |
| 4 | 4.9624492E+01 | 5.0168215E+01 | 4.9886777E+01 | 4.7647381E+01 | 4.4793226E+01 | 4.2286044E+01 |

| $DCT_8$ | $c_1$ | $c_2$ | $c_3$ | $c_4$ | $c_5$ | $c_6$ |
|---|---|---|---|---|---|---|
| 1 | -9.5964880E+00 | -3.3903724E+01 | -3.5352582E+01 | -4.1711281E+01 | -4.2897466E+01 | -4.5701648E+01 |
| 2 | 1.0619434E+01 | -7.3520420E+00 | -8.2408700E+00 | -1.0385828E+01 | -1.0143544E+01 | -1.0878553E+01 |
| 3 | - | 8.2025050E+00 | 8.9015690E+00 | 9.5353380E+00 | 1.1048504E+01 | 1.1704509E+01 |
| 4 | - | 3.4462810E+01 | 3.5876863E+01 | 4.0772401E+01 | 4.3840001E+01 | 4.6353193E+01 |

| $DCT_8$ | $c_7$ | $c_8$ | $c_9$ | $c_{10}$ | $c_{11}$ | $c_{12}$ |
|---|---|---|---|---|---|---|
| 1 | -4.7961932E+01 | -4.8286505E+01 | -4.7647342E+01 | -4.5551722E+01 | -4.2793806E+01 | -4.0058717E+01 |
| 2 | -1.2086163E+01 | -1.2062020E+01 | -1.1866112E+01 | -1.0934480E+01 | -1.0266811E+01 | -1.0142528E+01 |
| 3 | 1.1297486E+01 | 1.1540892E+01 | 1.1381415E+01 | 1.1560753E+01 | 1.0955589E+01 | 9.5518480E+00 |
| 4 | 4.7469024E+01 | 4.7799835E+01 | 4.7293355E+01 | 4.5967471E+01 | 4.3437865E+01 | 3.9757303E+01 |

| | DCT_MIN | | DCT_MAX |
|---|---|---|---|
| 1 | -1.9011765E+03 | 1 | 8.8453790E+02 |
| 2 | -1.6612631E+03 | 2 | 1.2597002E+03 |
| 3 | -2.0835872E+03 | 3 | 1.7416624E+03 |
| 4 | -2.2694102E+03 | 4 | 1.2551732E+03 |
| 5 | -2.1284104E+03 | 5 | 1.5298400E+03 |
| 6 | -2.4490903E+03 | 6 | 1.4041439E+03 |
| 7 | -2.5259890E+03 | 7 | 1.4250288E+03 |
| 8 | -1.8661368E+03 | 8 | 1.6859410E+03 |
| 9 | -1.5877273E+03 | 9 | 1.4950415E+03 |
| 10 | -1.5868761E+03 | 10 | 1.2614856E+03 |
| 11 | -1.4857581E+03 | 11 | 1.4488275E+03 |
| 12 | -1.3167421E+03 | 12 | 1.2497561E+03 |

| | MIN | MAX |
|---|---|---|
| c0 | 4.7984470E+01 | 2.6717798E+02 |
| logE | 3.3540310E+00 | 2.2511215E+01 |

| | DCT_PRED |
|---|---|
| 1 | 6.8989500E-01 |
| 2 | 6.0051900E-01 |
| 3 | 6.4554500E-01 |
| 4 | 6.8848700E-01 |
| 5 | 6.6498100E-01 |
| 6 | 5.9712700E-01 |
| 7 | 5.5010900E-01 |
| 8 | 5.3264200E-01 |
| 9 | 5.0679900E-01 |
| 10 | 4.7809200E-01 |
| 11 | 4.9084100E-01 |
| 12 | 5.2526000E-01 |

| | PRED |
|---|---|
| c0 | 9.9723000E-01 |
| logE | 9.9671600E-01 |

| | c0_DPCM | | logE_DPCM |
|---|---|---|---|
| 1 | -4.1784419E+01 | 1 | -4.2943890E+00 |
| 2 | -1.9246751E+01 | 2 | -1.9083280E+00 |
| 3 | -6.8412680E+00 | 3 | -6.8731100E-01 |
| 4 | -8.0480000E-03 | 4 | -1.3458000E-02 |
| 5 | 6.7587590E+00 | 5 | 5.7830600E-01 |
| 6 | 1.9723838E+01 | 6 | 1.6010100E+00 |
| 7 | 4.1175996E+01 | 7 | 3.7181750E+00 |
| 8 | 7.5208397E+01 | 8 | 7.1191920E+00 |

## Claims

1. A method for compressing cepstral parameters of a speech waveform for transmission and/or storage comprising transform coding a first set of selected ones of said cepstral parameters to provide a plurality of transform coefficients, and differential pulse code modulating at least one of said plurality of transform coefficients.

2. A method according to claim 1, comprising pulse code modulating one or more of the remainder of said plurality of transform coefficients.

3. A method according to claim 1 or claim 2, comprising differential pulse code modulating a second set of selected ones of feature extracted parameters.

4. A method according to claim 1 or claim 2 or claim 3, comprising providing periodic pulse code modulation updates for the differential pulse code modulation coding.

5. A method according to any preceding claim, wherein said first set of selected ones of said cepstral parameters comprises mel-frequency cepstral coefficients.

6. A method according to any preceding claim, wherein a second set of said feature extracted parameters comprises energy measures.

7. A method according to any preceding claim, comprising scalar quantizing the remainder of said transform coefficients.

8. A method according to any preceding claim, wherein said differential pulse code modulating employs scalar and/ or vector quantization.

9. A method according to any preceding claim, comprising buffering said feature extracted parameters in a pre-processing step.

10. A method according to any preceding claim, wherein the transform coding comprises discrete cosine transform coding.

11. A method according to any preceding claim, wherein said differential pulse code modulating includes probability density function optimised quantizers.

12. A method according to claim 11, wherein said quantizers and predictors are optimised separately or jointly.

13. Apparatus for compressing cepstral parameters of a speech waveform for transmission and/or storage comprising a transform coder for transform coding a first set of selected ones of said cepstral parameters to provide a plurality of transform coefficients, and a differential pulse code modulator for differential pulse code modulating at least one of said plurality of transform coefficients.

14. Apparatus according to claim 13, comprising a pulse code modulator for pulse code modulating one or more of the remainder of said plurality of transform coefficients.

15. Apparatus according to claim 13 or 14, comprising a differential pulse code modulator for differential pulse code modulating a second set of selected ones of feature extracted parameters.

16. Apparatus according to claim 13 or claim 14 or claim 15, comprising a periodic pulse code modulator for providing periodic pulse code modulation updates for the differential pulse code modulation coding.

17. Apparatus according to any of claim 13 to 16, wherein said first set of selected ones of said cepstral parameters comprises mel-frequency cepstral coefficients.

18. Apparatus according to any of claims 13 to 17, wherein a second set of said feature extracted parameters comprises energy measures.

19. Apparatus according to any of claims 13 to 18, comprising scalar quantization of the remainder of the transform coefficients.

20. Apparatus according to any of claims 13 to 19, wherein said differential pulse code modulator employs scalar and/ or vector quantization.

21. Apparatus according to any of claims 13 to 20, comprising a buffer for storing said feature extracted parameters in a pre-processing step.

22. Apparatus according to any of claims 13 to 21, wherein the transform coder comprises a discrete cosine transform coder.

**23.** Apparatus according to any of claims 13 to 22, wherein said differential pulse code modulating includes probability density function optimised quantizers.

**24.** Apparatus according to claims 23, wherein said quantizers and predictors are optimised separately or jointly.

**25.** A portable radio communication device comprising apparatus as defined in any of claims 13 to 24.

**26.** A speech recognition system for a radio communication system comprising a mobile station operating in a radio network, the system comprising a front end cepstral means disposed in said mobile station and a back end recognition means associated with the network and compression means for encoding cepstral parameters of a speech waveform, said compression means comprising a transform coder for transform coding a first set of selected ones of said cepstral parameters to provide a plurality of transform coefficients, and a differential pulse code modulator for differential pulse code modulating at least one of said plurality of transform coefficients.

**27.** A method for decompressing compressed cepstral parameters of a speech waveform comprising inverse differential pulse code modulating of at least one of a plurality of differential pulse code modulated transform coefficients to provide transform coefficients, and inverse transform coding of said transform coefficients.

**28.** A method according to claim 27, comprising inverse pulse code modulating of one or more of the plurality of pulse code modulated transform coefficients to provide the remainder of the transform coefficients.

**29.** A method according to claim 27 or claim 28, comprising inverse differential pulse code modulating of at least one of a plurality of differential pulse code modulated signals to provide a second set of decoded feature extracted parameters.

**Patentansprüche**

**1.** Verfahren zum Komprimieren von Cepstral-Parametern einer Sprachsignalform zum Senden und/oder Speichern, das umfasst: Transformationscodieren einer ersten Menge ausgewählter der Cepstral-Parameter, um mehrere Transformationskoeffizienten bereitzustellen, und Differenzpulscodemodulieren wenigstens eines der mehreren Transformationskoeffizienten.

**2.** Verfahren nach Anspruch 1, das umfasst: Pulscodemodulieren eines oder mehrerer der verbleibenden der mehreren Transformationskoeffizienten.

**3.** Verfahren nach Anspruch 1 oder Anspruch 2, das umfasst: Differenzpulscodemodulieren einer zweiten Menge ausgewählter merkmalsextrahierter Parametern.

**4.** Verfahren nach Anspruch 1 oder Anspruch 2 oder Anspruch 3, das umfasst: Bereitstellen von Aktualisierungen periodischer Pulacodemodulationen für die Differenzpulscodemodulations-Codierung.

**5.** Verfahren nach einem vorhergehenden Anspruch, bei dem die erste Menge ausgewählter der Cepstral-Parameter Mel-Frequenz-Cepstralkoeffizienten umfasst.

**6.** Verfahren nach einem vorhergehenden Anspruch, bei dem eine zweite Menge der merkmalsextrahierten Parameter Energiemaße umfasst.

**7.** Verfahren nach einem vorhergehenden Anspruch, das ein skalares Quantisieren der verbleibenden Transformationskoeffizienten umfasst.

**8.** Verfahren nach einem vorhergehenden Anspruch, bei dem die Differenzpulscodemodulation ein skalares und/oder ein vektorielles Quantisieren umfasst.

**9.** Verfahren nach einem vorhergehenden Anspruch, das das Puffern der merkmalsextrahierten Parameter in einem Vorverarbeitungsschritt umfasst.

**10.** Verfahren nach einem vorhergehenden Anspruch, bei dem die Transformationscodierung die Codierung mittels der diskreten Kosinustransformation umfasst.

11. Verfahren nach einem vorhergehenden Anspruch, bei dem die Differenzpulscodemodulation mit der Wahrscheinlichkeitsdichtefunktion optimierte Quantisierer umfasst.

12. Verfahren nach Anspruch 11, bei dem die Quantisierer und die Prädiktoren getrennt oder gemeinsam optimiert werden.

13. Vorrichtung zum Komprimieren von Cepstral-Parametern einer Sprachsignalform zum Senden und/oder Speichern, die umfasst: einen Transformationscodierer für die Transformationscodierung einer ersten Menge ausgewählter der Cepstral-Parameter, um mehrere Transformationskoeffizienten bereitzustellen, und einen Differenzpulscodemodulator für eine Differenzpulscodemodulation wenigstens eines der mehreren Transformationskoeffizienten.

14. Vorrichtung nach Anspruch 13, die einen Pulscodemodulator für die Pulscodemodulation eines oder mehrerer der verbleibenden der mehreren Transformationskoeffizienten umfasst.

15. Vorrichtung nach Anspruch 13 oder 14, die einen Differenzpulscodemodulator für die Differenzpulscodemodulation einer zweiten Menge ausgewählter merkmalsextrahierter Parametern umfasst.

16. Vorrichtung nach Anspruch 13 oder Anspruch 14 oder Anspruch 15, die einen Modulator für einen periodischen Pulscode umfasst, der Aktualisierungen periodischer Pulscodemodulationen für die Differenzpulscodemodulation-Codierung bereitstellt.

17. Vorrichtung nach einem der Ansprüche 13 bis 16, bei der die erste Menge ausgewählter der Cepstral-Parameter Mel-Frequenz-Cepstralkoeffizienten umfasst.

18. Vorrichtung nach einem der Ansprüche 13 bis 17, bei der eine zweite Menge der merkmalsextrahierten Parameter Energiemaße umfasst.

19. Vorrichtung nach einem der Ansprüche 13 bis 18, die ein skalares Quantisieren der verbleibenden Transformationskoeffizienten umfasst.

20. Vorrichtung nach einem der Ansprüche 13 bis 19, bei der der Differenzpulscodemodulator ein skalares und/oder ein vektorielles Quantisieren verwendet.

21. Vorrichtung nach einem der Ansprüche 13 bis 20, die einen Puffer zum Speichern der merkmalsextrahierten Parameter in einem Vorverarbeitungsschritt umfasst.

22. Vorrichtung nach einem der Ansprüche 13 bis 21, bei der der Transformationscodierer einen die diskrete Kosinustransformation verwendenden Codierer umfasst.

23. Vorrichtung nach einem der Ansprüche 13 bis 22, bei der die Differenzpulscodemodulation mit der Wahrscheinlichkeitsdichtefunktion optimierte Quantisierer enthält.

24. Vorrichtung nach Anspruch 23, bei der die Quantisierer und Prädiktoren getrennt oder gemeinsam optimiert sind.

25. Tragbare Funkkommunikationsvorrichtung, die eine Vorrichtung nach einem der Ansprüche 13 bis 24 umfasst.

26. Spracherkennungssystem für ein Funkkommunikationssystem, das eine in einem Funknetz arbeitende Mobilstation enthält, wobei das System umfasst: ein Vorrechner-Cepstral-Mittel, das in der Mobilstation angeordnet ist, und ein Nachrechner-Erkennungsmittel, das dem Netz zugeordnet ist, und Kompressionsmittel, die Cepstral-Parameter einer Sprachsignalform codieren, wobei die Kompressionsmittel einen Transformationscodierer zum Transformationscodieren einer ersten Menge ausgewählter der Cepstral-Parameter, um mehrere Transformationskoeffizienten bereitzustellen, und einen Differenzpulscodemodulator für eine Differenzpulscodemodulation wenigstens eines der mehreren Transformationskoeffizienten umfassen.

27. Verfahren zum Dekomprimieren komprimierter Cepstral-Parameter einer Sprachsignalform, das umfasst: inverses Differenzpulscodemodulieren wenigstens eines von mehreren differenzpulscodemodulierten Transformationskoeffizienten, um Transformationskoeffizienten bereitzustellen, und inverses Transformationscodieren der Transformationskoeffizienten.

28. Verfahren nach Anspruch 27, das umfasst: inverses Pulscodemodulieren eines oder mehrerer der mehreren pulscodemodulierten Transformationskoeffizienten, um die verbleibenden Transformationskoeffizienten bereitzustellen.

29. Verfahren nach Anspruch 27 oder Anspruch 28, das umfasst: inverses Differenzpulscodemodulieren wenigstens eines von mehreren differenzpulscodemodulierten Signalen, um eine zweite Menge decodierter merkmalsextrahierter Parameter bereitzustellen.

**Revendications**

1. Procédé de compression de paramètres cepstraux d'une forme d'onde de parole en vue de la transmission et/ou de la mémorisation comprenant un codage par transformation d'un premier ensemble de paramètres sélectionnés parmi lesdits paramètres cepstraux pour fournir une pluralité de coefficients de transformée, et une modulation par codage d'impulsions différentielle d'au moins l'un de ladite pluralité de coefficients de transformée.

2. Procédé selon la revendication 1, comprenant une modulation par codage d'impulsions d'un ou plusieurs du reste de ladite pluralité des coefficients de transformée.

3. Procédé selon la revendication 1 ou la revendication 2, comprenant une modulation par codage d'impulsions différentielle d'un second ensemble de paramètres sélectionnés parmi des paramètres extraits de caractéristiques.

4. Procédé selon la revendication 1 ou la revendication 2 ou la revendication 3, comprenant la fourniture de mises à jour de modulation par codage d'impulsions périodiques pour le codage à modulation par codage d'impulsions différentielle.

5. Procédé selon l'une quelconque des revendications précédentes, dans lequel ledit premier ensemble de paramètres sélectionnés parmi lesdits paramètres cepstraux comprend les coefficients cepstraux de fréquence en mel.

6. Procédé selon l'une quelconque des revendications précédentes, dans lequel un second ensemble desdits paramètres extraits de caractéristiques comprend des mesures d'énergie.

7. Procédé selon l'une quelconque des revendications précédentes, comprenant la quantification scalaire du reste desdits coefficients de transformée.

8. Procédé selon l'une quelconque des revendications précédentes, dans lequel ladite modulation par codage d'impulsions différentielle emploie une quantification scalaire et/ou vectorielle.

9. Procédé selon l'une quelconque des revendications précédentes, comprenant la mise en tampon desdits paramètres extraits de caractéristiques dans une étape de prétraitement.

10. Procédé selon l'une quelconque des revendications précédentes, dans lequel le codage par transformation comprend un codage à transformation en cosinus discrète.

11. Procédé selon l'une quelconque des revendications précédentes, dans lequel ladite modulation par codage d'impulsions différentielle comprend les quantificateurs optimisés à fonction de densité de probabilité.

12. Procédé selon la revendication 11, dans lequel lesdits quantificateurs et lesdits prédicteurs sont optimisés séparément ou conjointement.

13. Dispositif destiné à compresser des paramètres cepstraux d'une forme d'onde de parole en vue de la transmission et/ou de la mémorisation comprenant un codeur à transformation destiné à coder par transformation un premier ensemble de paramètres sélectionnés parmi lesdits paramètres cepstraux pour fournir une pluralité de coefficients de transformée, et un dispositif de modulation par codage d'impulsions différentielle destiné à réaliser une modulation par codage d'impulsions différentielle d'au moins l'un de ladite pluralité de coefficients de transformée.

**14.** Dispositif selon la revendication 13, comprenant un dispositif de modulation par codage d'impulsions destiné à moduler par codage d'impulsions un ou plusieurs du reste de ladite pluralité de coefficients de transformée.

**15.** Dispositif selon la revendication 13 ou 14, comprenant un dispositif de modulation par codage d'impulsions différentielle destiné à réaliser une modulation par codage d'impulsions différentielle d'un second ensemble de paramètres sélectionnés parmi les paramètres extraits de caractéristiques.

**16.** Dispositif selon la revendication 13 ou la revendication 14 ou la revendication 15, comprenant un dispositif de modulation par codage d'impulsions périodique destiné à fournir des mises à jour de modulation par codage d'impulsions périodiques pour le codage à modulation par codage d'impulsions différentielle.

**17.** Dispositif selon l'une quelconque des revendications 13 à 16, dans lequel ledit premier ensemble de paramètres sélectionnés parmi lesdits paramètres cepstraux comprend des coefficients cepstraux de fréquence en mel.

**18.** Dispositif selon l'une quelconque des revendications 13 à 17, dans lequel un second ensemble desdits paramètres extraits de caractéristiques comprend des mesures d'énergie.

**19.** Procédé selon l'une quelconque des revendications 13 à 18, comprenant une quantification scalaire du reste des coefficients de transformée.

**20.** Dispositif selon l'une quelconque des revendications 13 à 19, dans lequel ledit dispositif de modulation par codage d'impulsions différentielle emploie une quantification scalaire et/ou vectorielle.

**21.** Dispositif selon l'une quelconque des revendications 13 à 20, comprenant une mémoire tampon destinée à mémoriser lesdits paramètres extraits de caractéristiques dans une étape de prétraitement.

**22.** Dispositif selon l'une quelconque des revendications 13 à 21, dans lequel le codeur par transformation comprend un codeur à transformation en cosinus discrète.

**23.** Dispositif selon l'une quelconque des revendications 13 à 22, dans lequel ladite modulation par codage d'impulsions différentielle comprend des quantificateurs optimisés à fonction de densité de probabilité.

**24.** Dispositif selon la revendication 23, dans lequel lesdits quantificateurs et lesdits prédicteurs sont optimisés séparément ou conjointement.

**25.** Dispositif de radiocommunications portable comprenant le dispositif tel que défini dans l'une quelconque des revendications 13 à 24.

**26.** Système de reconnaissance de la parole destiné à un système de radiocommunications comprenant une station mobile fonctionnant dans un réseau radio, le système comprenant un moyen cepstral frontal disposé dans ladite station mobile et un moyen de reconnaissance final associé au réseau et un moyen de compression destiné à coder les paramètres cepstraux d'une forme d'onde de parole, ledit moyen de compression comprenant un codeur à transformation destiné à coder par transformation un premier ensemble de paramètres sélectionnés parmi lesdits paramètres cepstraux pour fournir une pluralité de coefficients de transformée, et un dispositif de modulation par codage d'impulsions différentielle destiné à réaliser une modulation par codage d'impulsions différentielle d'au moins l'un de ladite pluralité de coefficients de transformée.

**27.** Procédé de décompression des paramètres cepstraux compressés d'une forme d'onde de parole comprenant une modulation par codage d'impulsions différentielle inverse d'au moins l'un d'une pluralité de coefficients de transformée ayant subi une modulation par codage d'impulsions différentielle pour fournir des coefficients de transformée, et un codage par transformation inverse desdits coefficients de transformée.

**28.** Procédé selon la revendication 27, comprenant une modulation par codage d'impulsions inverse d'un ou plusieurs de ladite pluralité de coefficients de transformée ayant subi une modulation par codage d'impulsions pour fournir le reste des coefficients de transformée.

**29.** Procédé selon la revendication 27 ou la revendication 28, comprenant une modulation par codage d'impulsions différentielle inverse d'au moins l'un d'une pluralité de signaux ayant subi une modulation par codage d'impulsions différentielle pour fournir un second ensemble de paramètres extraits de caractéristiques décodés.

FEATURE
VECTOR
COMPONENTS

QUANTIZATION

COMPRESSED DATA
FOR TRANSMISSION

$C_1$ — $Q_{c1}$

$C_2$ — $Q_{c2}$

$C_{12}$ — $Q_{c12}$

$C_{0/logE}$ — $Q_{c0/logE}$

M
U
X

FIG. 1

EP 1 121 686 B1

FIG. 2

FIG. 3

ABBREVIATIONS:

ADC     ANALOG-TO-DIGITAL CONVERSION
HPF     HIGH-PASS FILTER
PE      PRE-EMPHASIS
logE    ENERGY MEASURE COMPUTATION
W       WINDOWING
FFT     FAST FOURIER TRANSFORM (ONLY MAGNITUDE COMPONENTS)
MF      MEL-FILTERING
LOG    NONLINEAR TRANSFORMATION
DCT    DISCRETE COSINE TRANSFORM
MFCC   MEL-FREQUENCY CEPSTRAL COEFFICIENT
CL       CEPSTRAL LIFTERING

EP 1 121 686 B1

38

CONTROL
LOGIC
(DPCM/PCM
UPDATE)

$C_1$

CEPSTRAL
COEFFICIENT
COMPRESSION

$C_2$

CEPSTRAL
COEFFICIENT
COMPRESSION

FROM
FRONT
END

$C_{12}$

CEPSTRAL
COEFFICIENT
COMPRESSION

logE

$Q_{log}E$

$DPCM_{log}E$

c0

$Q_{cO}$

$DPCM_{cO}$

MUX
+
BIT
STREAM
FORMATTING

TO
TRANSMISSION
CHANNEL

FIG. 4

FIG. 5a

$C_x$

BUFFER

DCT

$DCT_{x,1}$

$DCT_{x,2}$

$DCT_{x,8}$

$Q_{x,1}$

$DPCM_x$

$Q_{x,2}$

$Q_{x,8}$

TO MUX
+
BIT STREAM
FORMATTING

36

38

EP 1 121 686 B1

DPCM

IN + Σ $RESID_x$ $Q_x$ OUT

$Q_x^{-1}$

FIG. 5b

+ Σ +

$K_x$ D

−

+

CONTROL LOGIC (DPCM/PCM UPDATE)

FROM TRANSMISSION CHANNEL

FRAME SYNCHRONI-SATION + DEMUX

CEPSTRAL COEFFICIENT DECOMPRESSION $\quad C_1{}^*$

CEPSTRAL COEFFICIENT DECOMPRESSION $\quad C_2{}^*$

CEPSTRAL COEFFICIENT DECOMPRESSION $\quad C_{12}{}^*$

TO BACK END

$Q_{\log E}{}^{-1}$ $\quad \log E^*$

$DPCM_{\log E}{}^{-1}$

$Q_{cO}{}^{-1}$ $\quad c0^*$

$DPCM_{cO}{}^{-1}$

FIG. 6

FIG. 7a

FROM
SYNCHRONI-
SATION
+
DEMUX

$Q_{x,1}^{-1}$

$DPCM_x^{-1}$

$Q_{x,2}^{-1}$

$Q_{x,8}^{-1}$

$DCT_{x,1}^*$

$DCT_{x,2}^*$

$DCT_{x,8}^*$

IDCT

BUFFER

$C_x^*$

EP 1 121 686 B1

$DPCM^{-1}$

IN

$Q_x^{-1}$

+

$\Sigma$

+

OUT

$K_x$

D

FIG. 7b